(19) Europäisches Patentamt / European Patent Office / Office européen des brevets

(11) **EP 4 287 647 A1**

(12) **EUROPEAN PATENT APPLICATION**
published in accordance with Art. 153(4) EPC

(43) Date of publication:
**06.12.2023 Bulletin 2023/49**

(21) Application number: **22746020.1**

(22) Date of filing: **28.01.2022**

(51) International Patent Classification (IPC):
*H04R 3/00* $^{(2006.01)}$       *A63F 13/215* $^{(2014.01)}$
*A63F 13/216* $^{(2014.01)}$     *H04B 1/707* $^{(2011.01)}$
*G01S 5/30* $^{(2006.01)}$       *G06F 3/01* $^{(2006.01)}$
*G06F 3/0346* $^{(2013.01)}$

(52) Cooperative Patent Classification (CPC):
**A63F 13/215; A63F 13/216; G01S 5/30; G06F 3/01; G06F 3/0346; H04B 1/707; H04R 3/00**

(86) International application number:
**PCT/JP2022/003256**

(87) International publication number:
**WO 2022/163801 (04.08.2022 Gazette 2022/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.01.2021 JP 2021012820**

(71) Applicant: **Sony Group Corporation
Tokyo 108-0075 (JP)**

(72) Inventors:
• **YAMASHITA Kosei
Tokyo 108-0075 (JP)**

• **MAKINO Kenichi
Tokyo 108-0075 (JP)**
• **KAMATA Hiroyuki
Tokyo 108-0075 (JP)**
• **ITABASHI Tetsunori
Tokyo 108-0075 (JP)**
• **SATO Tetsuro
Tokyo 108-0075 (JP)**

(74) Representative: **MFG Patentanwälte
Meyer-Wildhagen Meggle-Freund
Gerhard PartG mbB
Amalienstraße 62
80799 München (DE)**

(54) **INFORMATION PROCESSING APPARATUS, INFORMATION PROCESSING METHOD, AND PROGRAM**

(57)   The present disclosure relates to an information processing device, an information processing method, and a program each capable of measuring a position and a posture by using sound without bringing discomfort to a user. A spread code signal emitted from each of multiple sound output blocks present at known positions, shifted to a frequency band that is not easily perceivable for a human sense of hearing, and based on a spread code to which spread spectrum modulation has been applied is received. The received spread code signal of a sound signal is reversely shifted. The own absolute position and the own absolute posture are calculated on the basis of the reversely shifted spread code signal, and angular velocity and acceleration detected by an IMU. The present disclosure is applicable to a game controller and an HMD.

EP 4 287 647 A1

# FIG.1

31-1

SOUND
OUTPUT BLOCK

30

31-2

SOUND
OUTPUT BLOCK

11

MOVE

32

ELECTRONIC
APPARATUS

31-3

SOUND
OUTPUT BLOCK

31-4

SOUND
OUTPUT BLOCK

32

ELECTRONIC APPARATUS

41

SOUND INPUT BLOCK

51

SOUND
INPUT UNIT

52

IMU

**Description**

[Technical Field]

The present disclosure relates to an information processing device, an information processing method, and a program, and particularly to an information processing device, an information processing method, and a program each capable of measuring a position and a posture by using sound without bringing discomfort to a user.

[Background Art]

There has been proposed a technology which measures a distance between a transmission device and a reception device in the following manner. The transmission device generates a modulation signal by modulating a data code by using a code sequence and emits the modulation signal as sound, and the reception device receives the emitted sound, derives a correlation between the modulation signal as a received sound signal and the code sequence, and measures a distance from the transmission device on the basis of a peak of the correlation (see PTL 1).

[Citation List]

[Patent Literature]

[PTL 1]
Japanese Patent Laid-open No. 2014-220741

[Summary]

[Technical Problems]

In a case where the reception device measures the distance from the transmission device by using the technology described in PTL 1, however, the emitted sound is sound corresponding to the modulation signal generated by modulating the data code on the basis of the code sequence.
In this case, the reception device continuously emits sound corresponding to the modulation signal during measurement of the distance from the transmission device. Accordingly, when the sound corresponding to the modulation signal is emitted simultaneously with emission of a musical composition or the like as main sound to be emitted, for example, a user listening to and viewing the musical composition as the main sound hears a mixture of the sound of the musical composition and the sound corresponding to the modulation signal. In this case, the sound corresponding to the modulation signal may disturb and bring discomfort to the user listening to and viewing the main musical composition.
Moreover, the technology disclosed in PTL 1 can measure the distance between the transmission device and the reception device, but cannot measure a direction and a posture of the reception device.
The present disclosure has been developed in consideration of the abovementioned circumstances, and particularly achieves measurement of a position and a posture by using sound without bringing discomfort to a user.

[Solution to Problems]

An information processing device and a program according to one aspect of the present disclosure each include a sound reception unit that receives a sound signal output from each of multiple sound output blocks present at known positions, the sound signal including a spread code signal based on a spread code to which spread spectrum modulation has been applied, an IMU (Inertial Measurement Unit) that detects angular velocity and acceleration, and a position-posture calculation unit that calculates an own absolute position and an own absolute posture on the basis of the sound signal received by the sound reception unit, the angular velocity, and the acceleration.
An information processing method according to one aspect of the present disclosure includes a step of receiving a sound signal output from each of multiple sound output blocks present at known positions, the sound signal including a spread code signal based on a spread code to which spread spectrum modulation has been applied, a step of detecting angular velocity and acceleration, and a step of calculating an own absolute position and an own absolute posture on the basis of the received sound signal, the angular velocity, and the acceleration.
According to the one aspect of the present disclosure, a sound signal that is output from each of the multiple sound output blocks present at the known positions and includes a spread code signal based on a spread code to which spread spectrum modulation has been applied is received. Angular velocity and acceleration are detected. The own absolute position and the own absolute posture are calculated on the basis of the received sound signal, the angular velocity, and the acceleration.

[Brief Description of Drawings]

[FIG. 1]

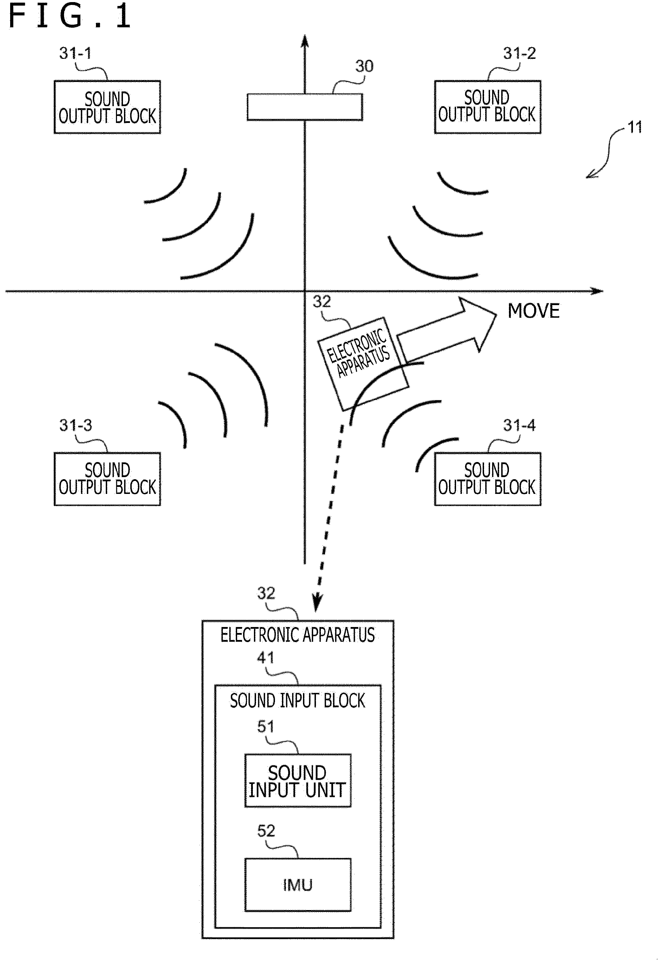

FIG. 1 is a diagram explaining a configuration example of a home audio system according to a first embodiment of the present disclosure.
[FIG. 2]

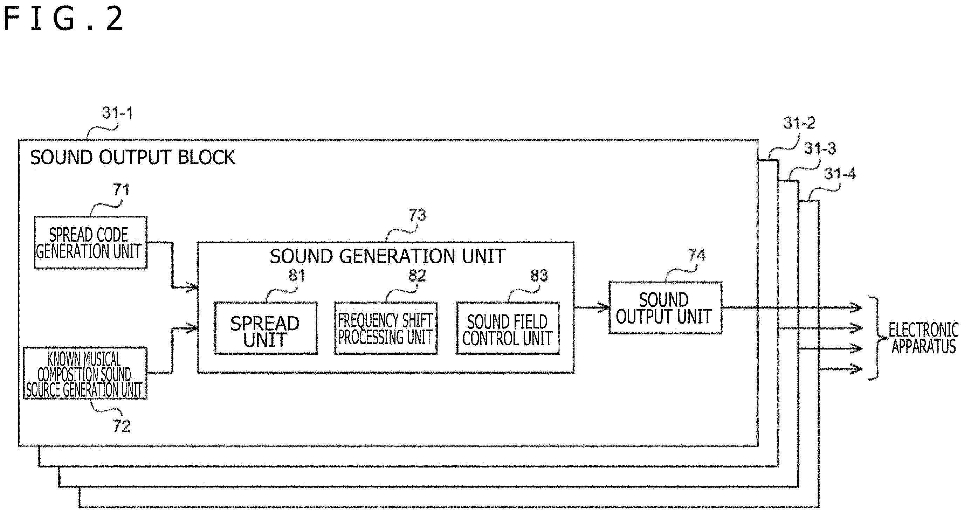

FIG. 2 is a diagram explaining a configuration example of sound output blocks in FIG. 1.
[FIG. 3]

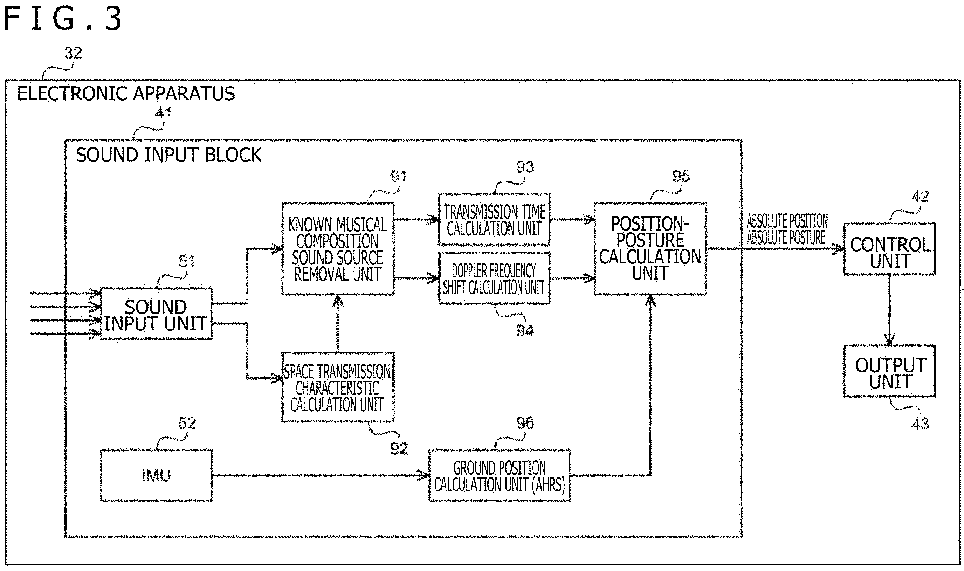

FIG. 3 is a diagram explaining a configuration example of an electronic apparatus in FIG. 1.
[FIG. 4]

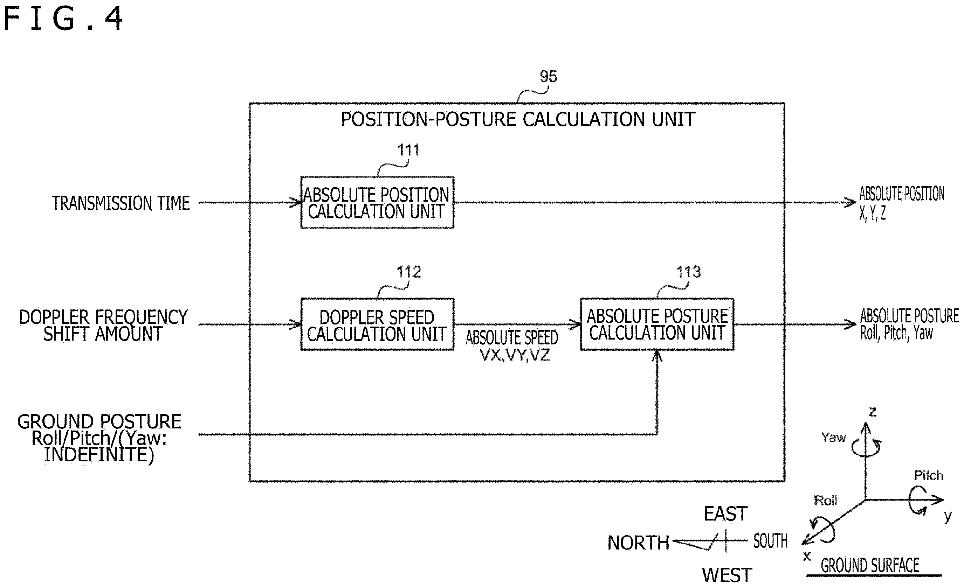

FIG. 4 is a diagram explaining a configuration example of a position-posture calculation unit in FIG. 3.
[FIG. 5]

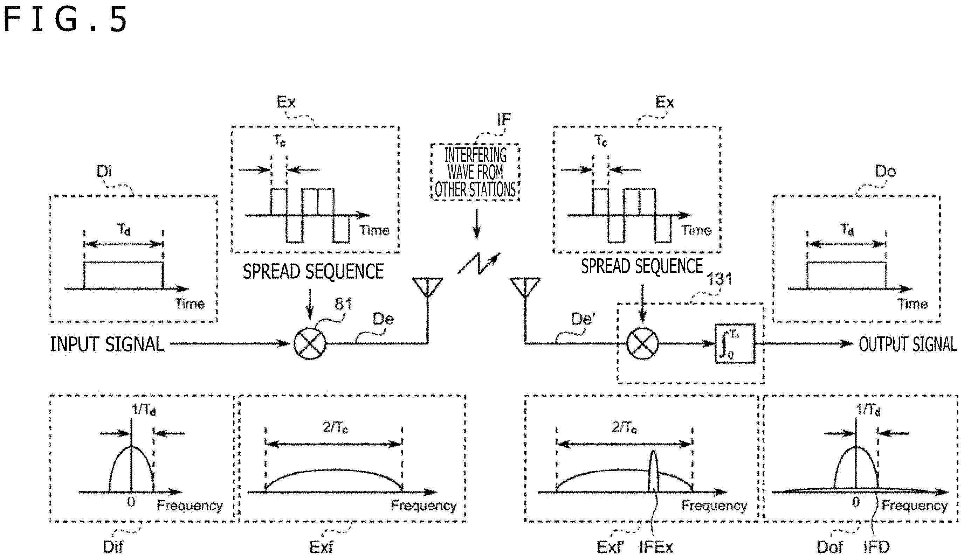

FIG. 5 is a diagram explaining communication using a spread code.
[FIG. 6]

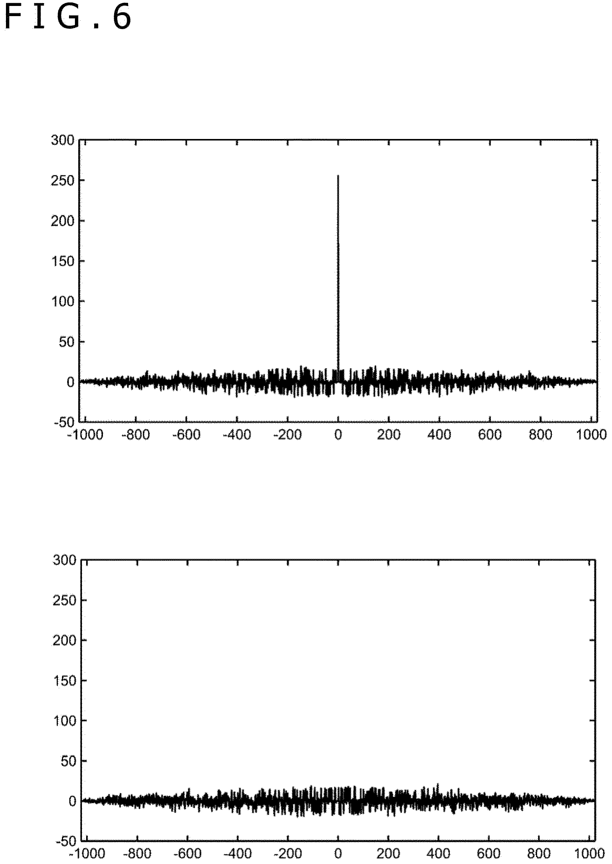

FIG. 6 is a diagram explaining an autocorrelation and a cross-correlation of a spread code.
[FIG. 7]

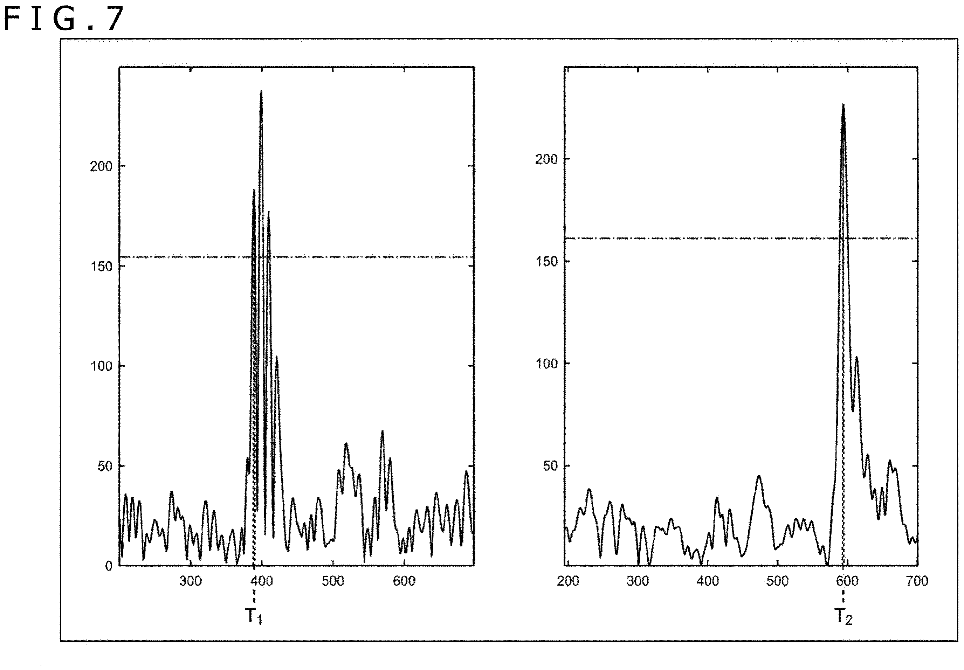

FIG. 7 is a diagram explaining a transmission time of a spread code using a cross-correlation.
[FIG. 8]

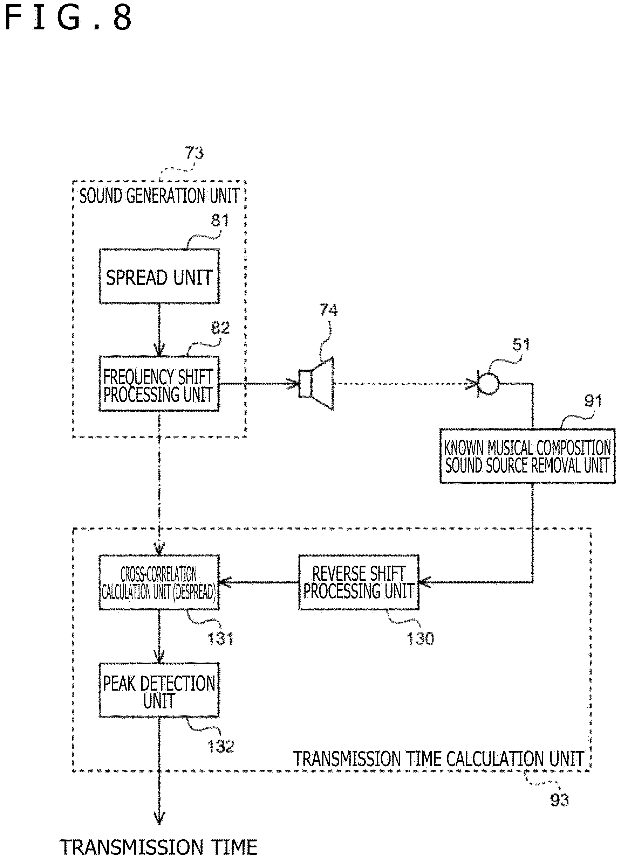

FIG. 8 is a diagram explaining a configuration example of a transmission time calculation unit.
[FIG. 9]

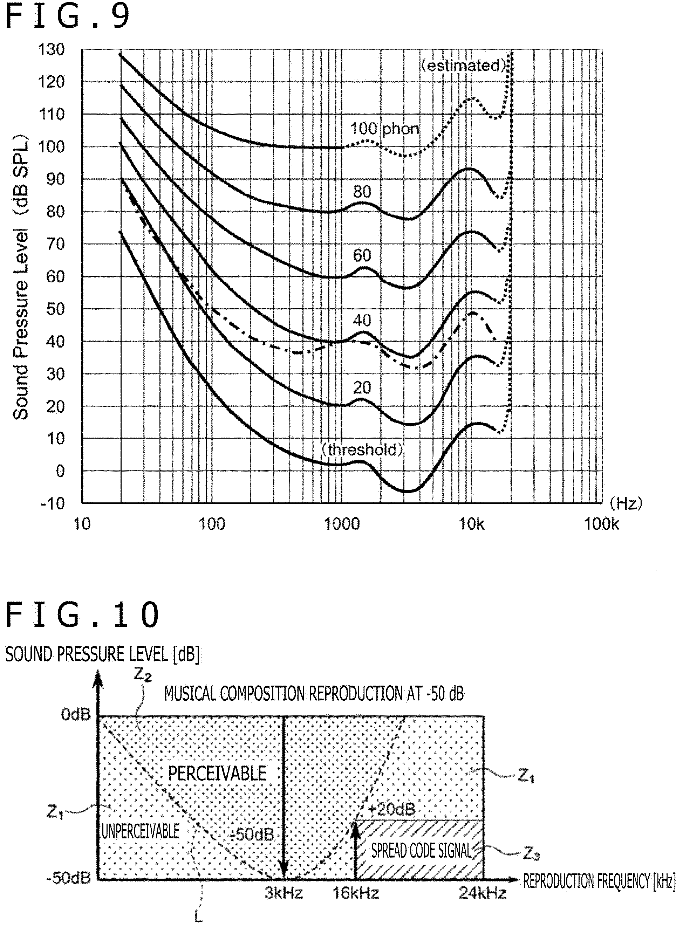

FIG. 9 is a diagram explaining a human sense of hearing.
[FIG. 10]
FIG. 10 is a diagram explaining a frequency shift of a spread code.
[FIG. 11]

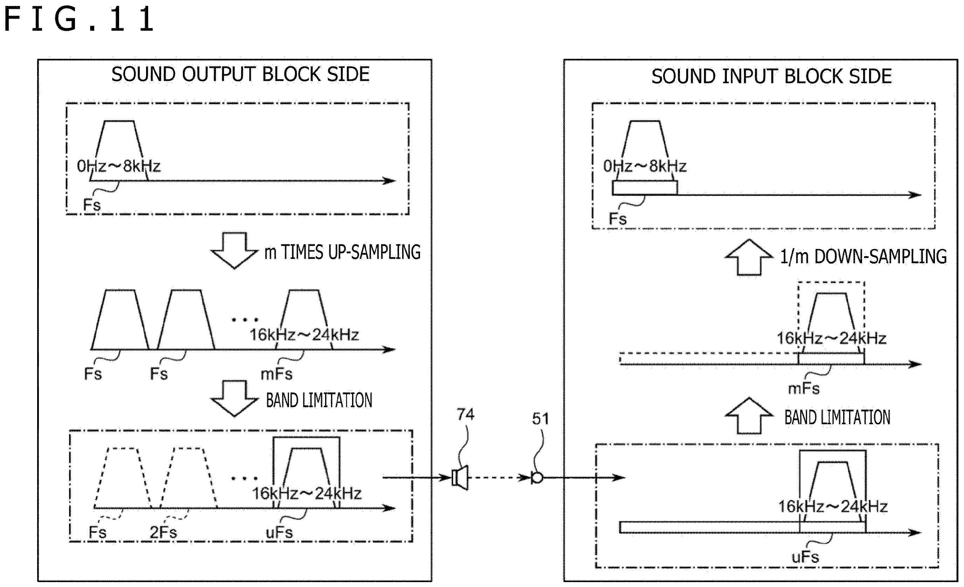

FIG. 11 is a diagram explaining procedures of a frequency shift of a spread code.
[FIG. 12]

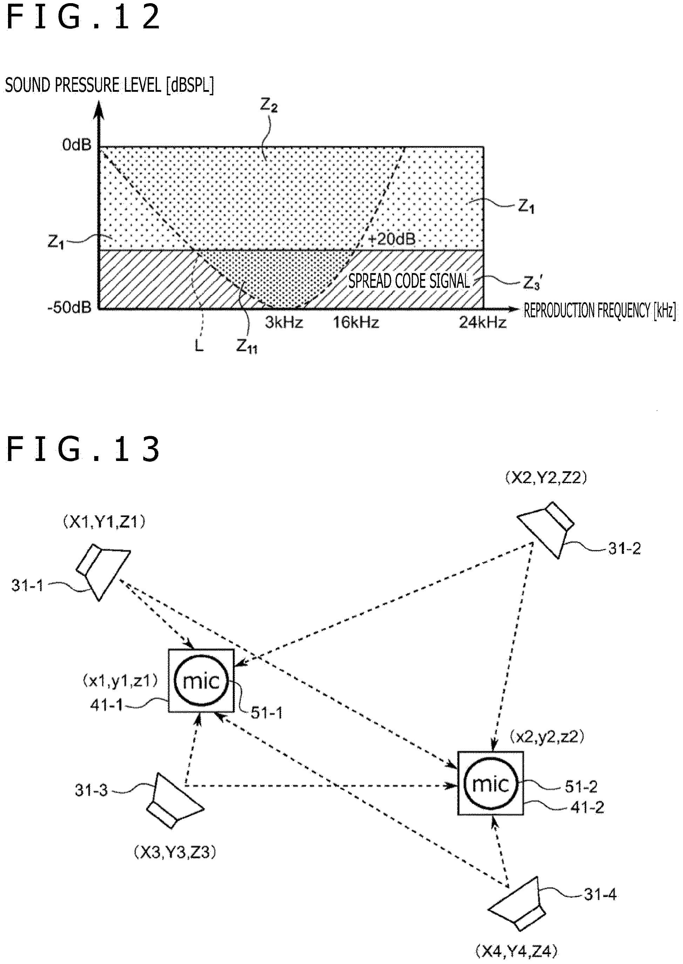

FIG. 12 is a diagram explaining an example of a case where multipath is taken into consideration.
[FIG. 13]
FIG. 13 is a diagram explaining a manner of obtaining an absolute position.
[FIG. 14]

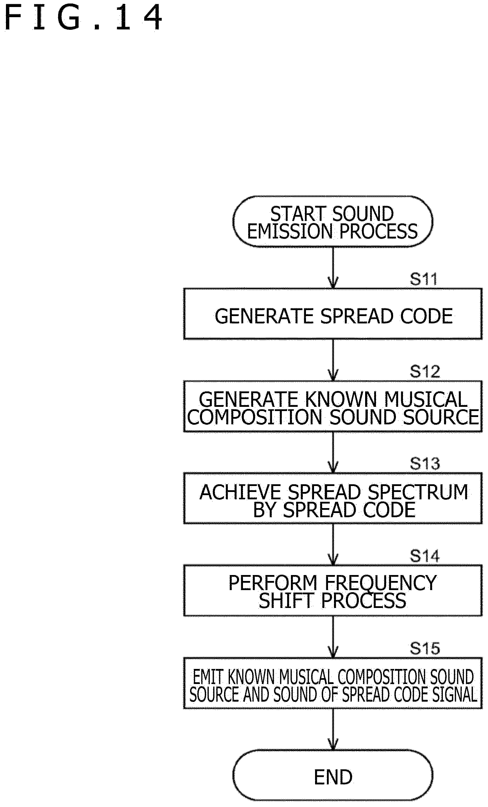

FIG. 14 is a flowchart explaining a sound emission (output) process performed by the sound output blocks.
[FIG. 15]

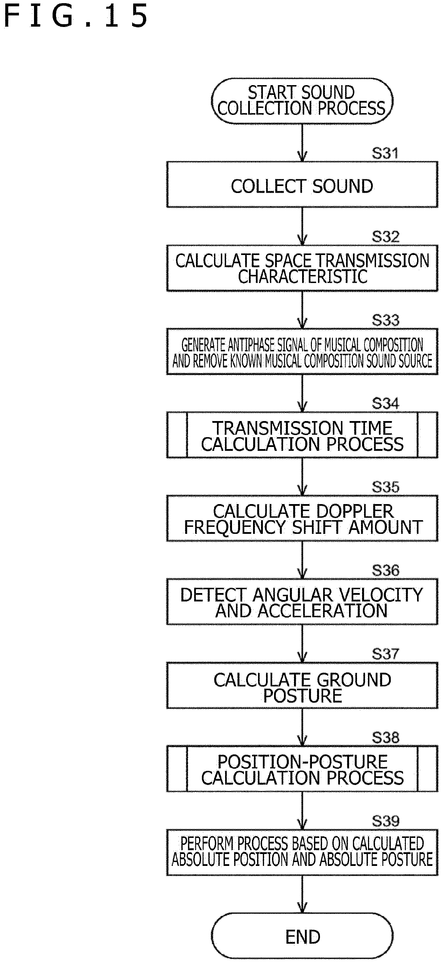

FIG. 15 is a flowchart explaining a sound collection process performed by the electronic apparatus.
[FIG. 16]

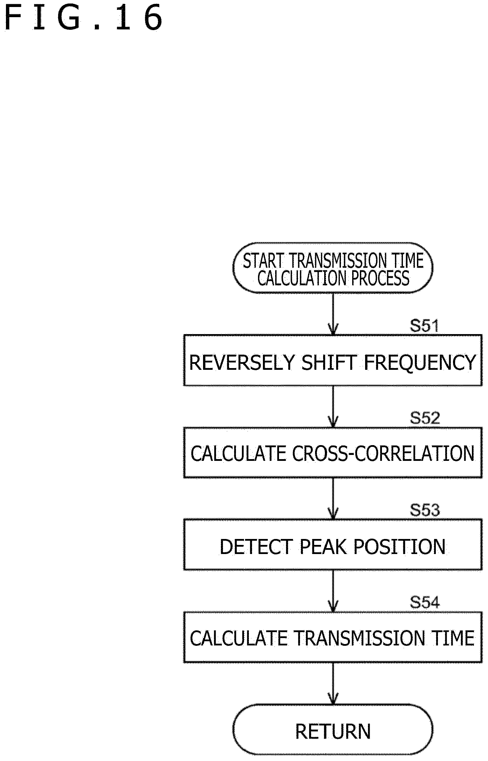

FIG. 16 is a flowchart explaining a transmission time calculation process.
[FIG. 17]

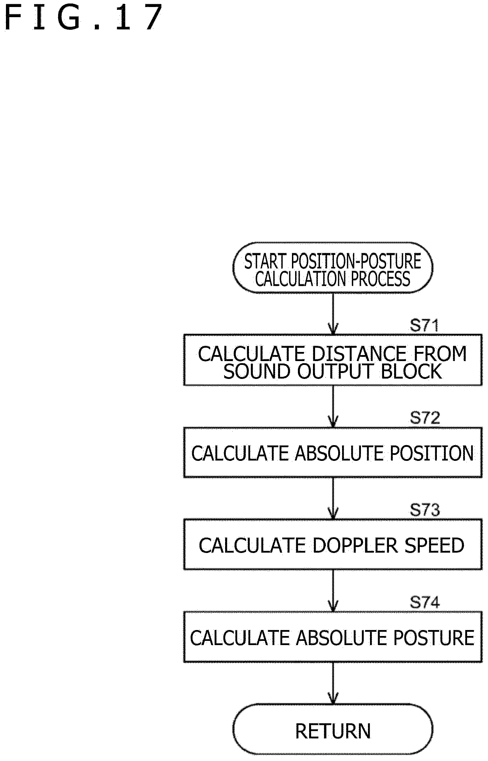

FIG. 17 is a flowchart explaining a position-posture calculation process.
[FIG. 18]

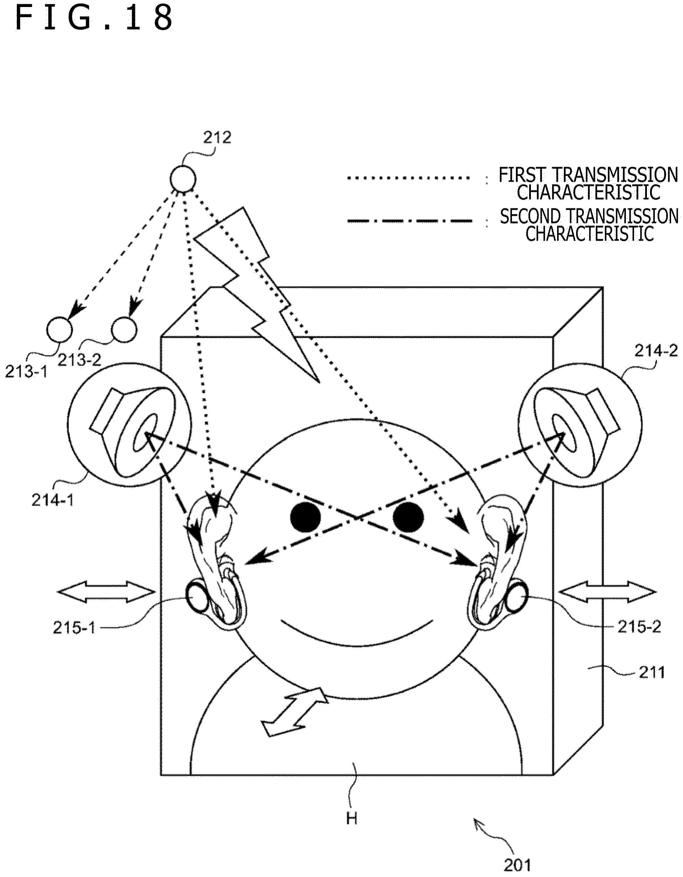

FIG. 18 is a diagram explaining a first application example.
[FIG. 19]

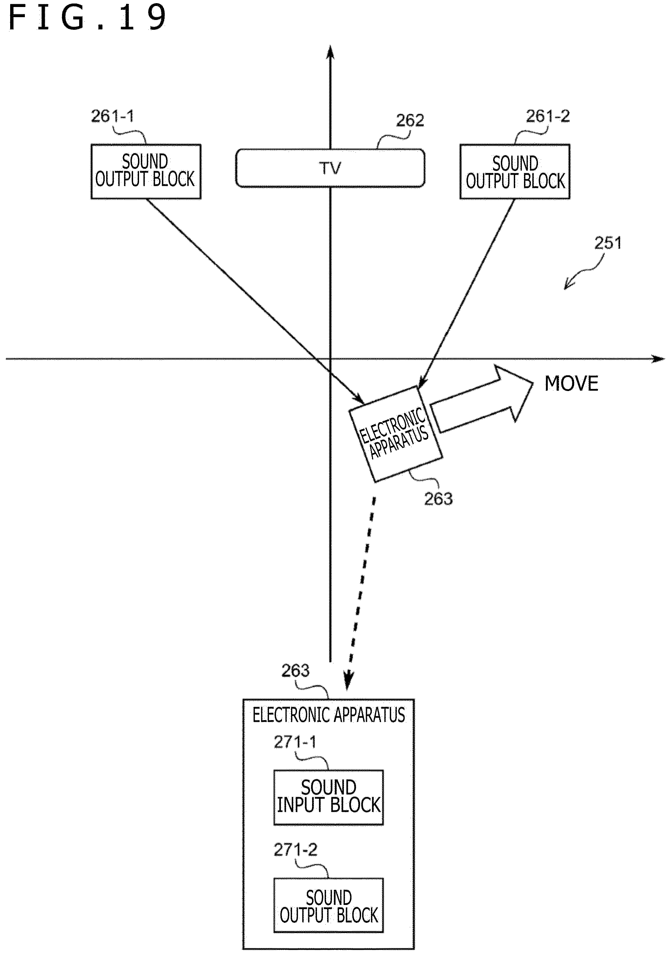

FIG. 19 is a diagram explaining a second application example.
[FIG. 20]

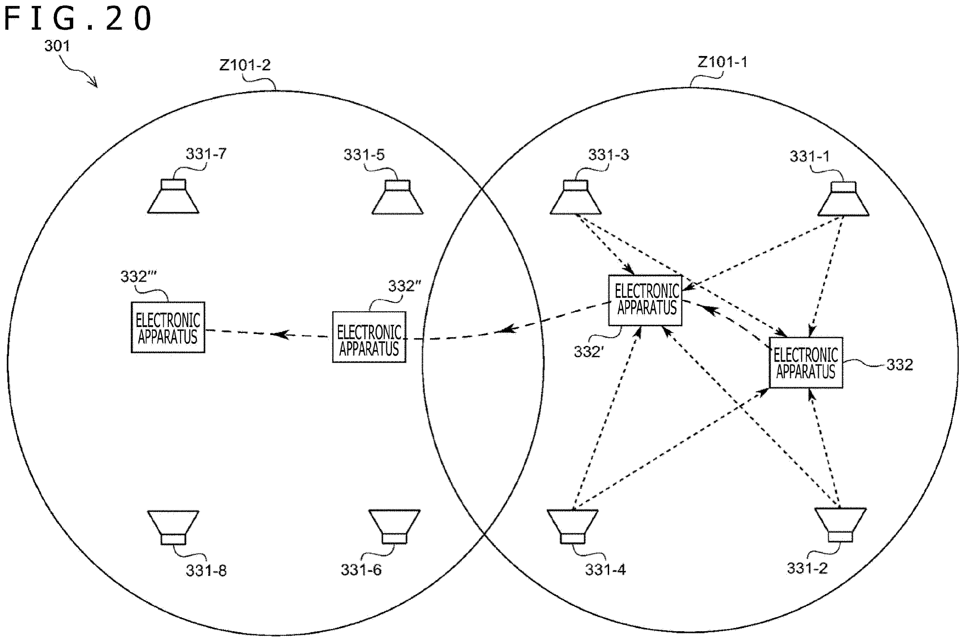

FIG. 20 is a diagram explaining a third application example.
[FIG. 21]

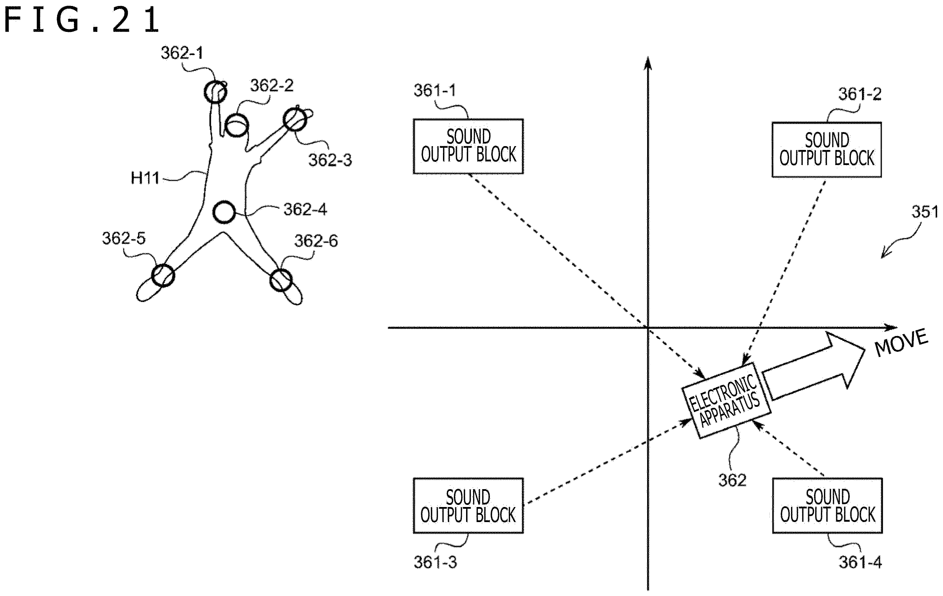

FIG. 21 is a diagram explaining a fourth application example.
[FIG. 22]

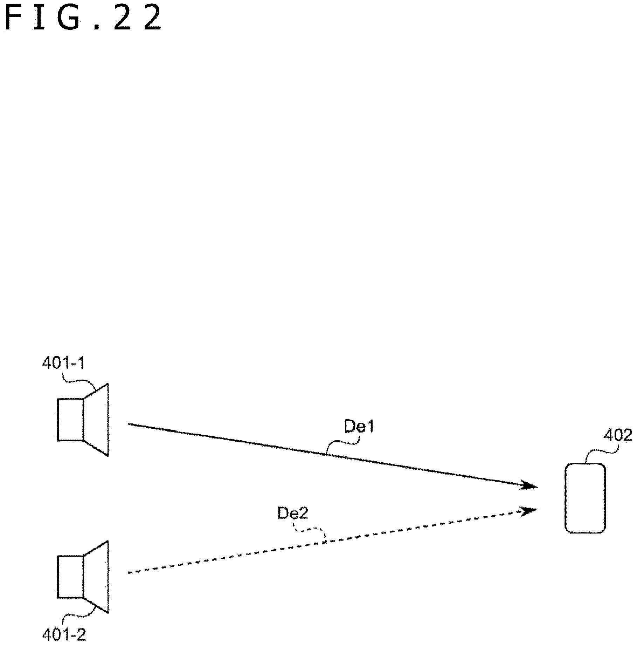

FIG. 22 is a diagram explaining a manner of obtaining a peak of cross-correlation power for each of the sound output blocks.
[FIG. 23]

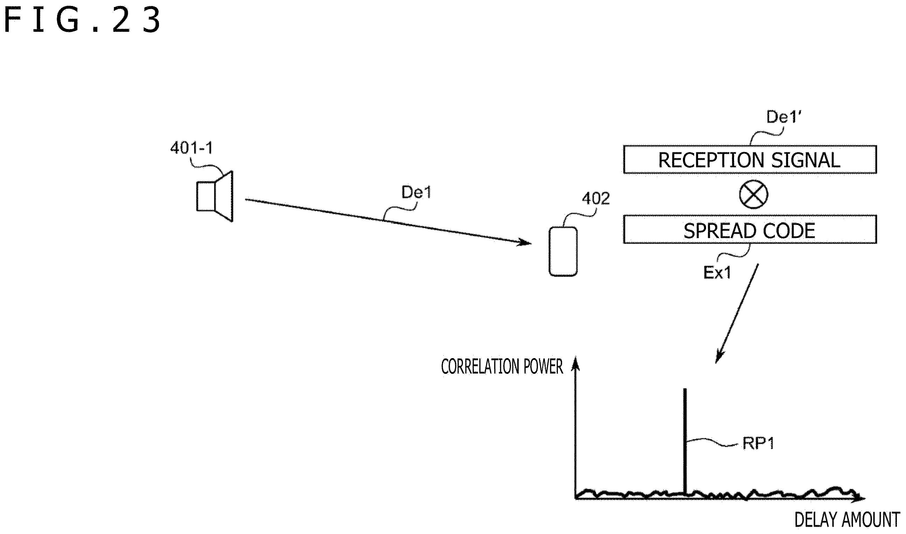

FIG. 23 is a diagram explaining a manner of obtaining a peak of cross-correlation power for each of the sound output blocks.
[FIG. 24]

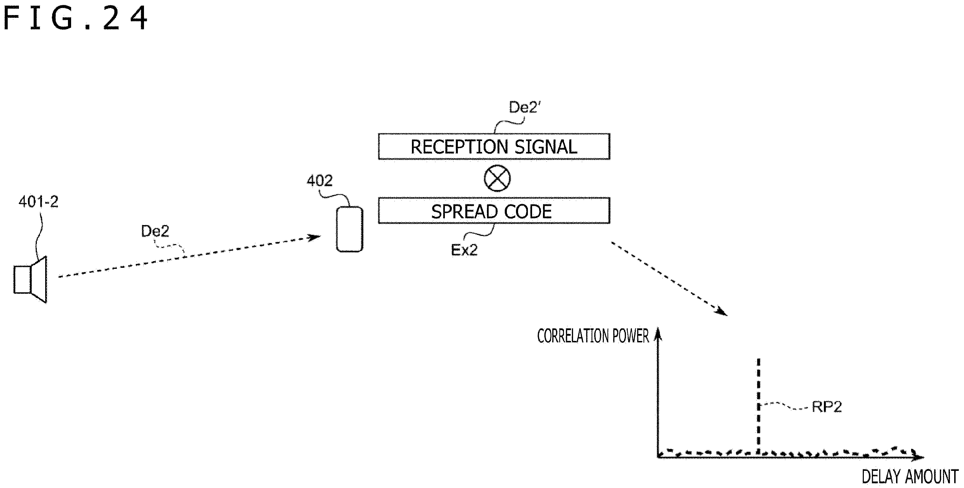

FIG. 24 is a diagram explaining a manner of obtaining a peak of cross-correlation power for each of the sound output blocks.

[FIG. 25]

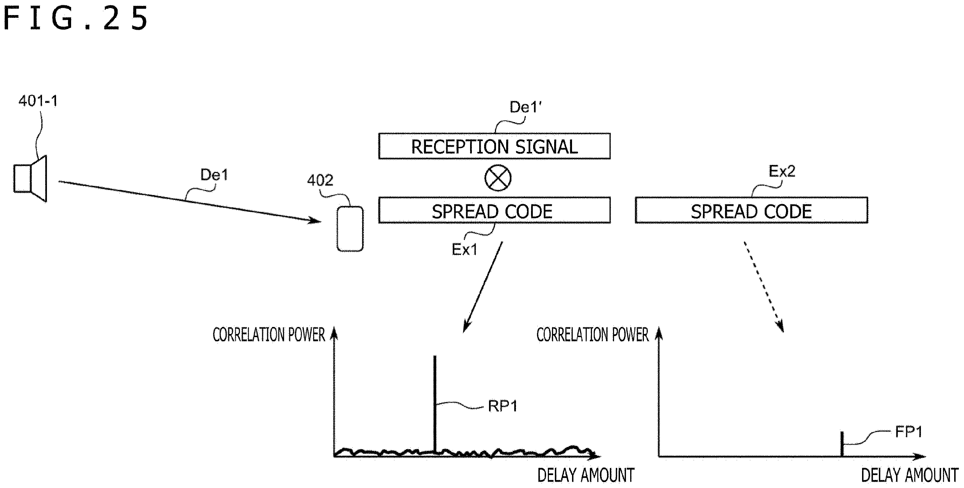

FIG. 25 is a diagram explaining that a true peak and a false peak are present in cross-correlation power for each of the sound output blocks.

[FIG. 26]

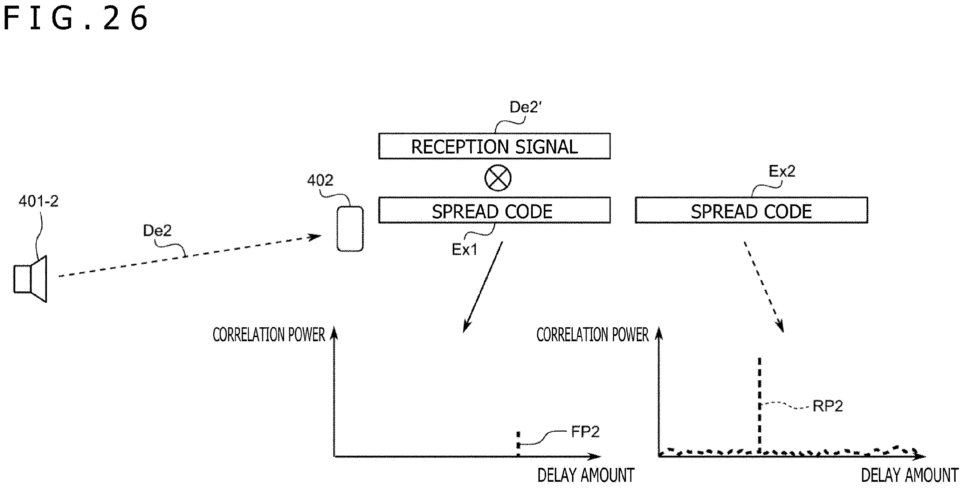

FIG. 26 is a diagram explaining that a true peak and a false peak are present in cross-correlation power for each of the sound output blocks.

[FIG. 27]

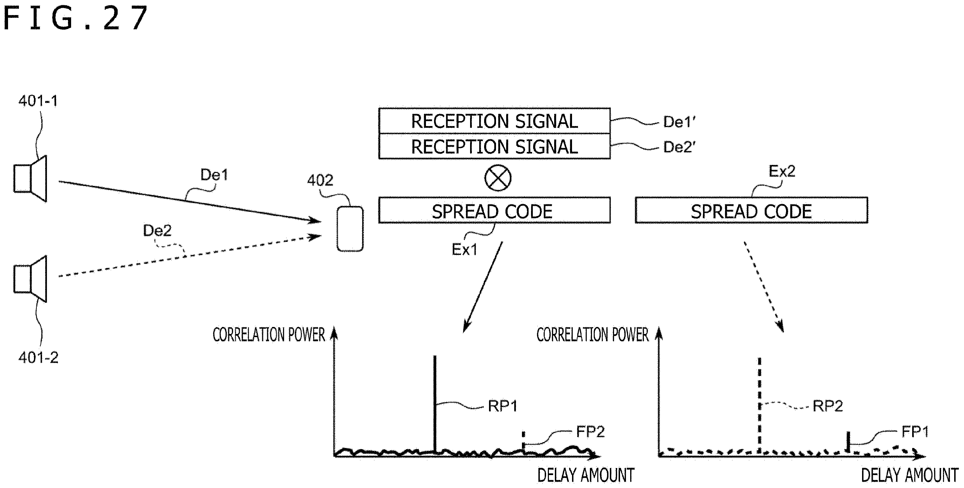

FIG. 27 is a diagram explaining that a true peak and a false peak are present in cross-correlation power for each of the sound output blocks.

[FIG. 28]

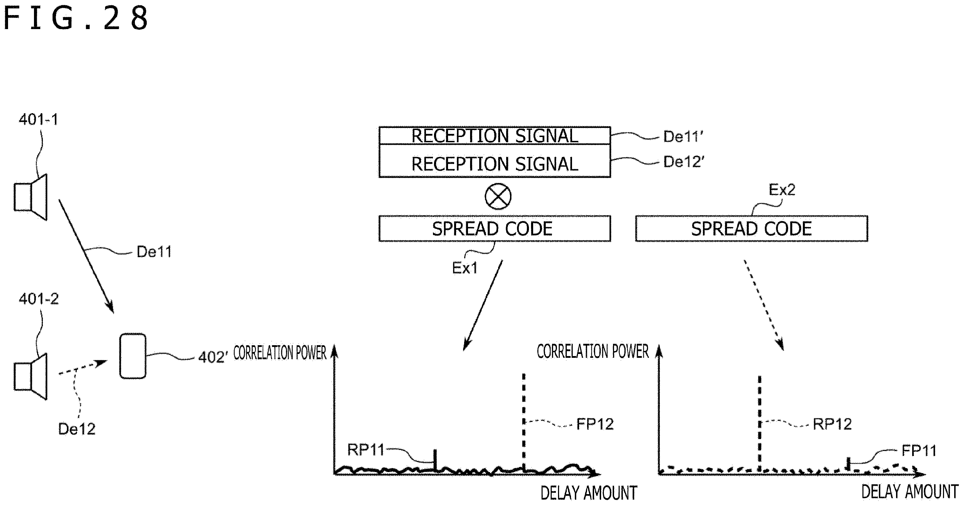

FIG. 28 is a diagram explaining that there is a case where appropriate distinction between a true peak and a false peak of cross-correlation power for each of the sound output blocks is difficult.

[FIG. 29]

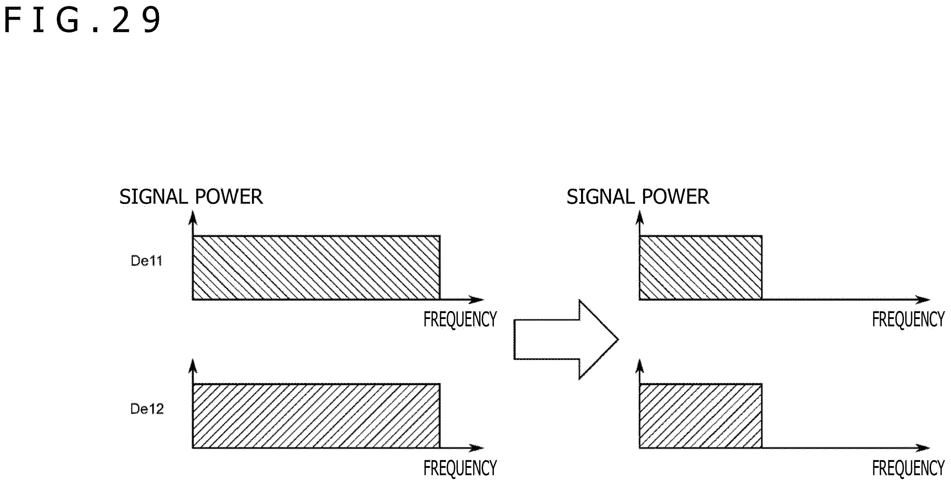

FIG. 29 is a diagram explaining a method of achieving division multiplexing while orthogonalizing spread code signals emitted to the sound output blocks.

[FIG. 30]

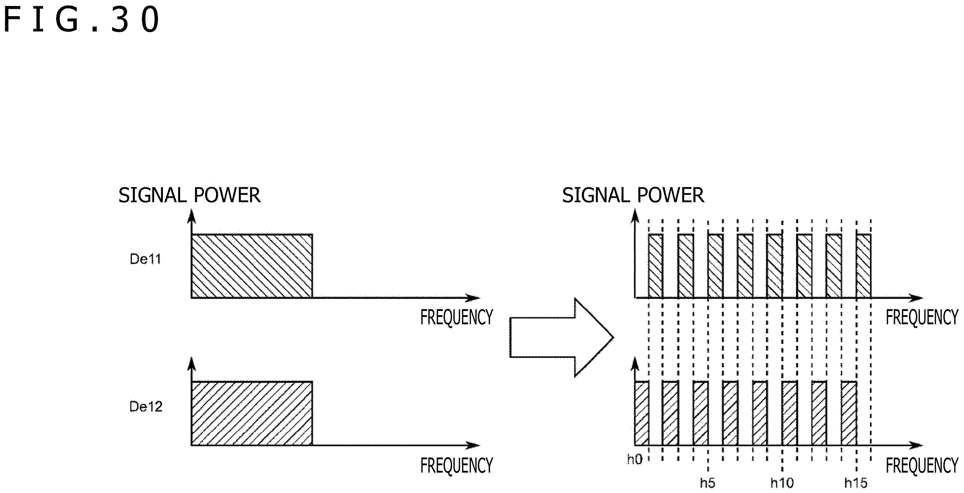

FIG. 30 is a diagram explaining the method of achieving division multiplexing while orthogonalizing the spread code signals emitted to the sound output blocks.

[FIG. 31]

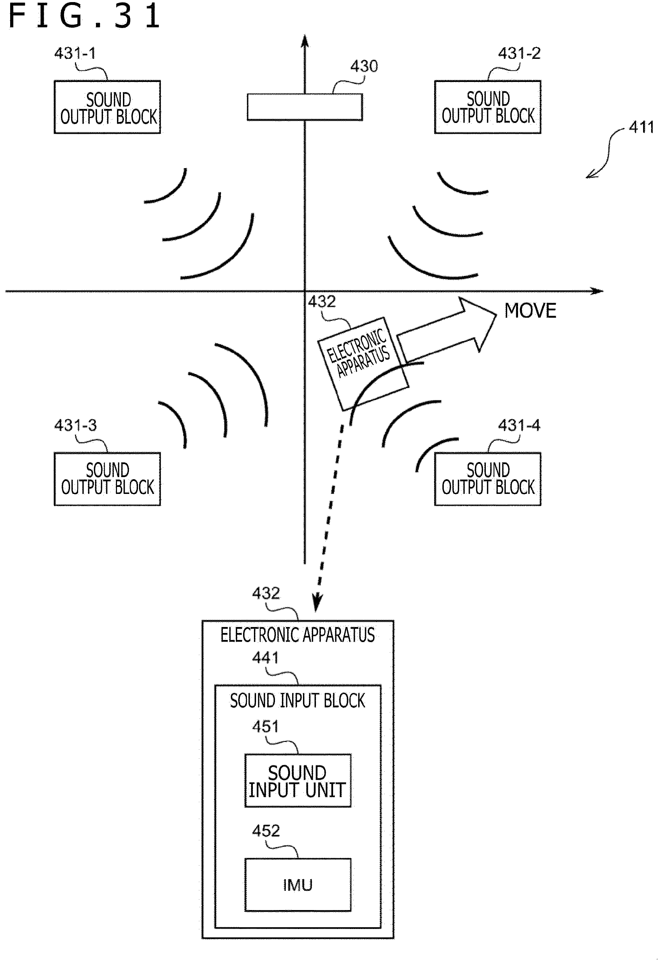

FIG. 31 is a diagram explaining a configuration example of a home audio system according to a second embodiment of the present disclosure.

[FIG. 32]

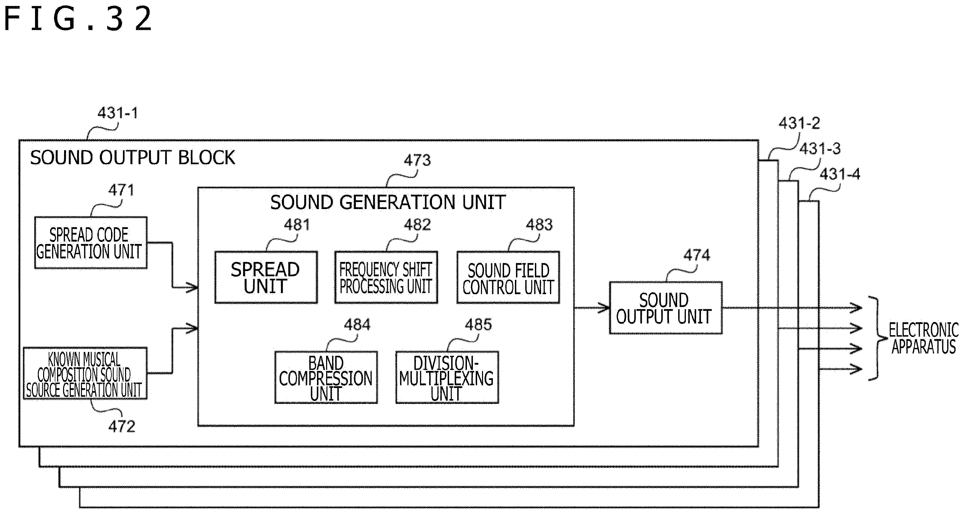

FIG. 32 is a diagram explaining a configuration example of sound output blocks in FIG. 31.

[FIG. 33]

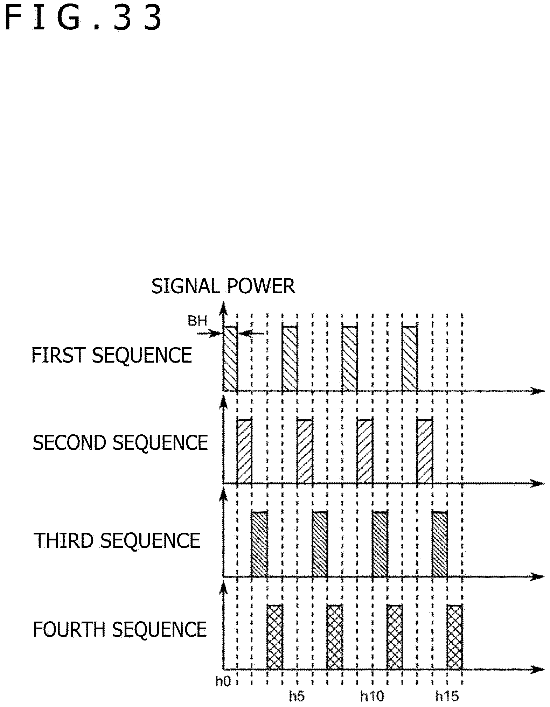

FIG. 33 is a diagram explaining the method of achieving division multiplexing while orthogonalizing the spread code signals emitted from the four sound output blocks.

[FIG. 34]

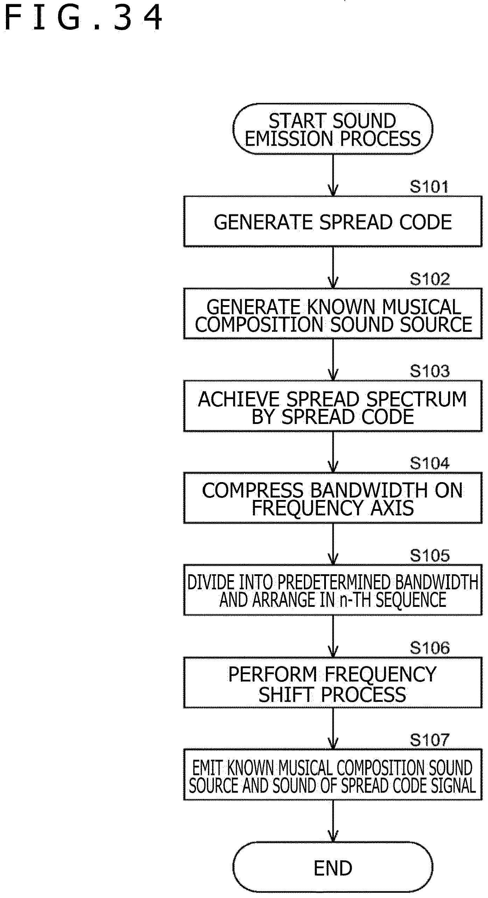

FIG. 34 is a flowchart explaining a sound emission (output) process performed by the sound output blocks in FIG. 32.

[FIG. 35]

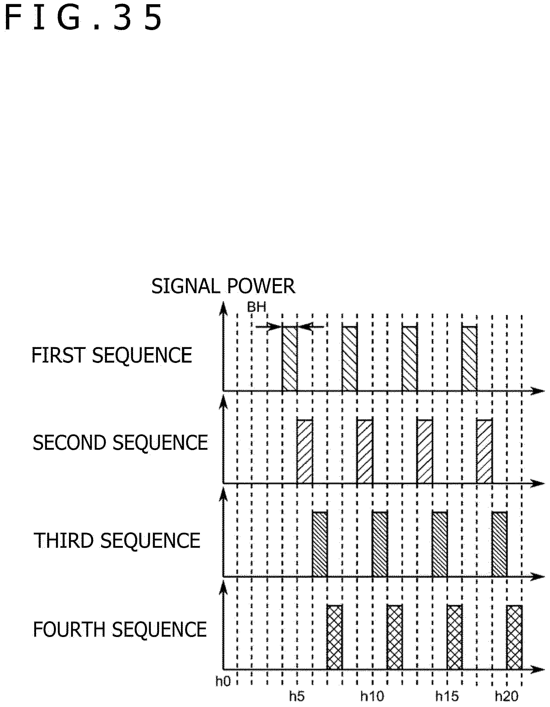

FIG. 35 is a diagram explaining a first modification according to the second embodiment of the present disclosure.

[FIG. 36]

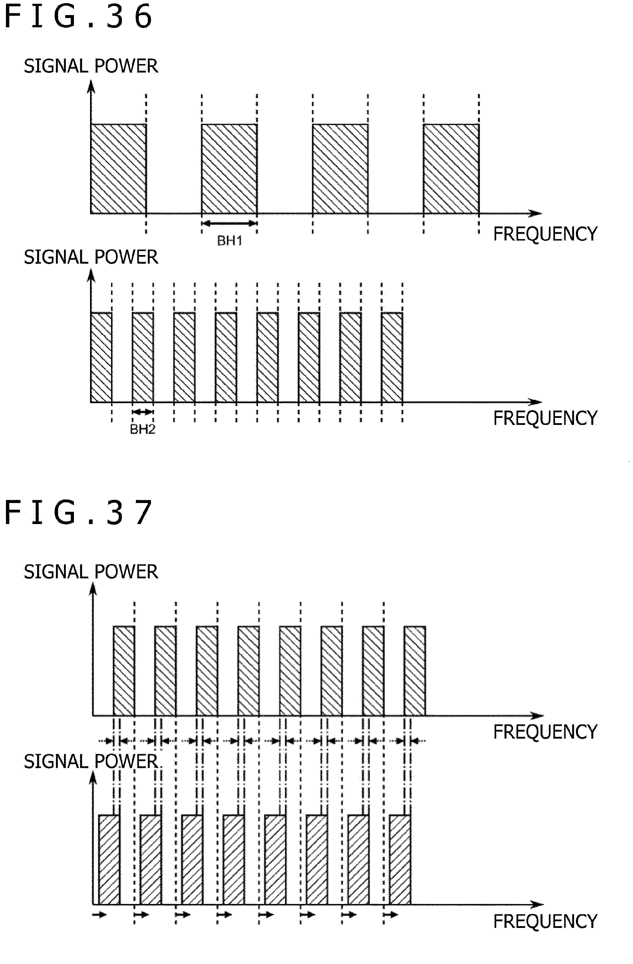

FIG. 36 is a diagram explaining a second modification according to the second embodiment of the present disclosure.

[FIG. 37]

FIG. 37 is a diagram explaining an effect of Doppler frequency shift produced by movement of an electronic apparatus.

[FIG. 38]

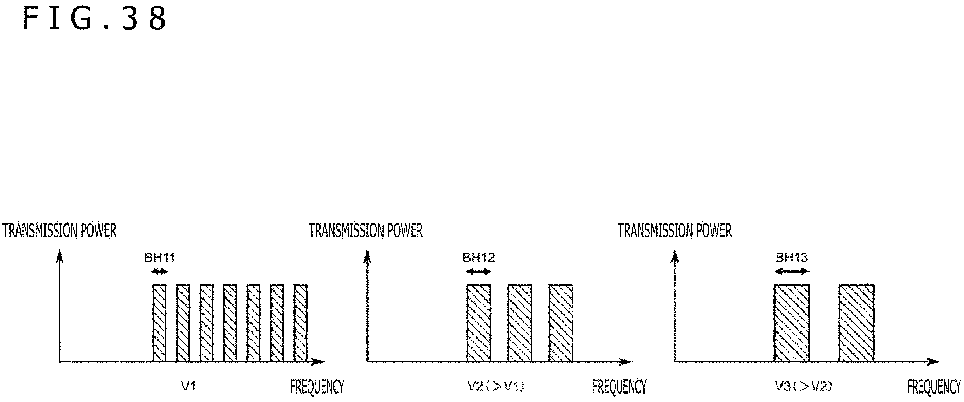

FIG. 38 is a diagram explaining an example of a change of a frequency bandwidth for dividing an emitted spread code signal according to the moving speed of the electronic apparatus.

[FIG. 39]

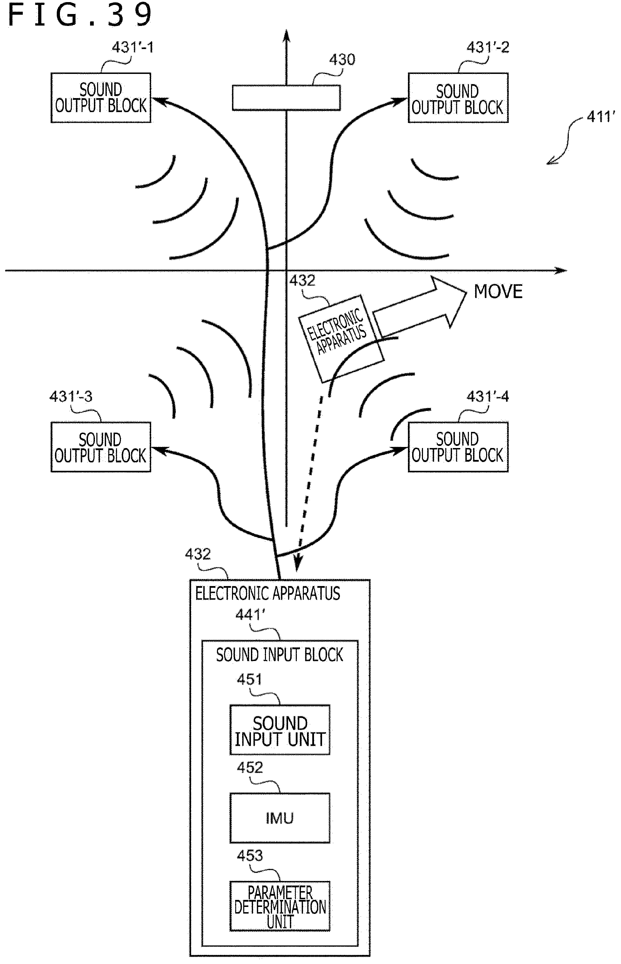

FIG. 39 is a diagram explaining a configuration example of a home audio system according to an application example of the second embodiment of the present disclosure.

[FIG. 40]

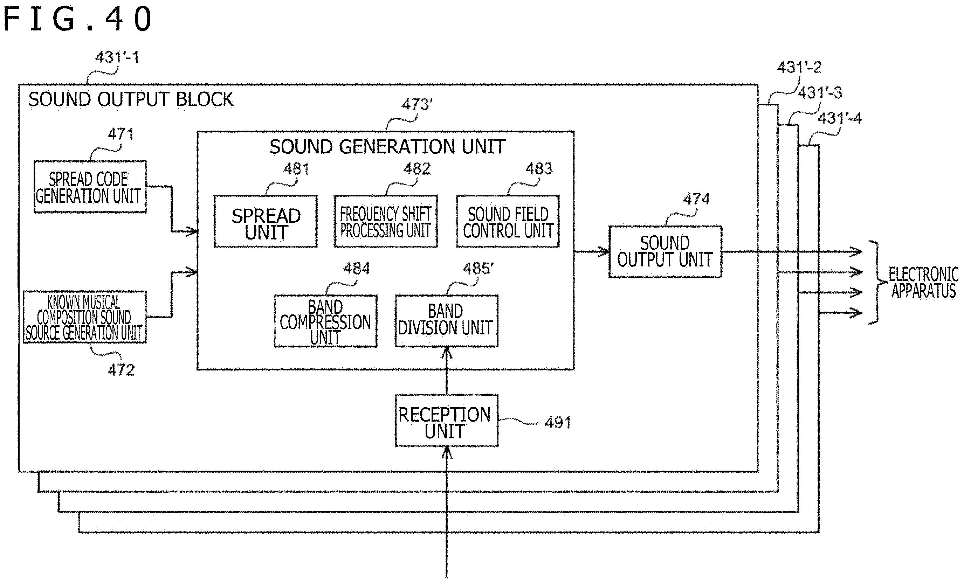

FIG. 40 is a diagram explaining a configuration example of sound output blocks in FIG. 39.

[FIG. 41]

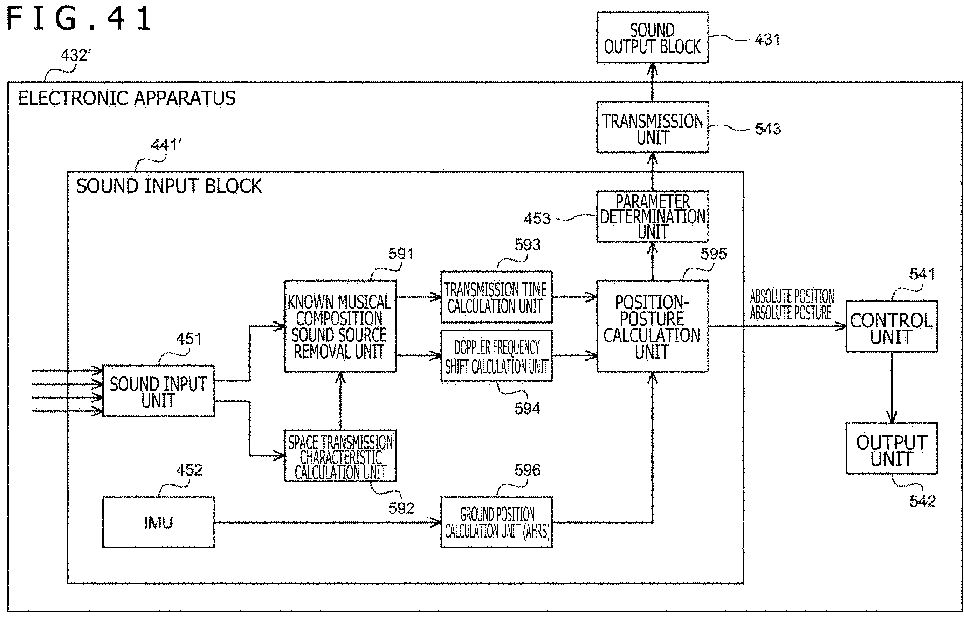

FIG. 41 is a diagram explaining a configuration example of an electronic apparatus in FIG. 39.

[FIG. 42]

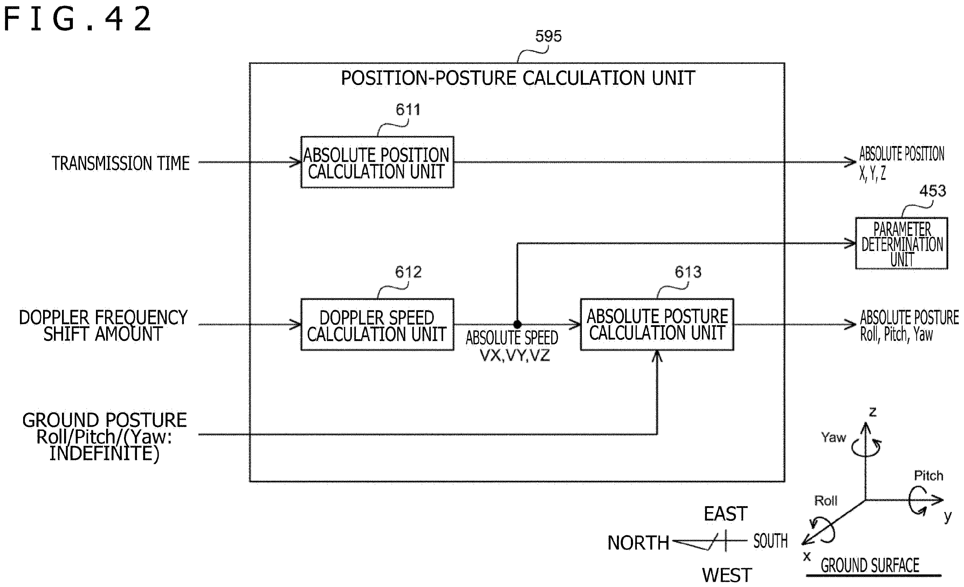

FIG. 42 is a diagram explaining a configuration example of a position-posture calculation unit in FIG. 41.

[FIG. 43]

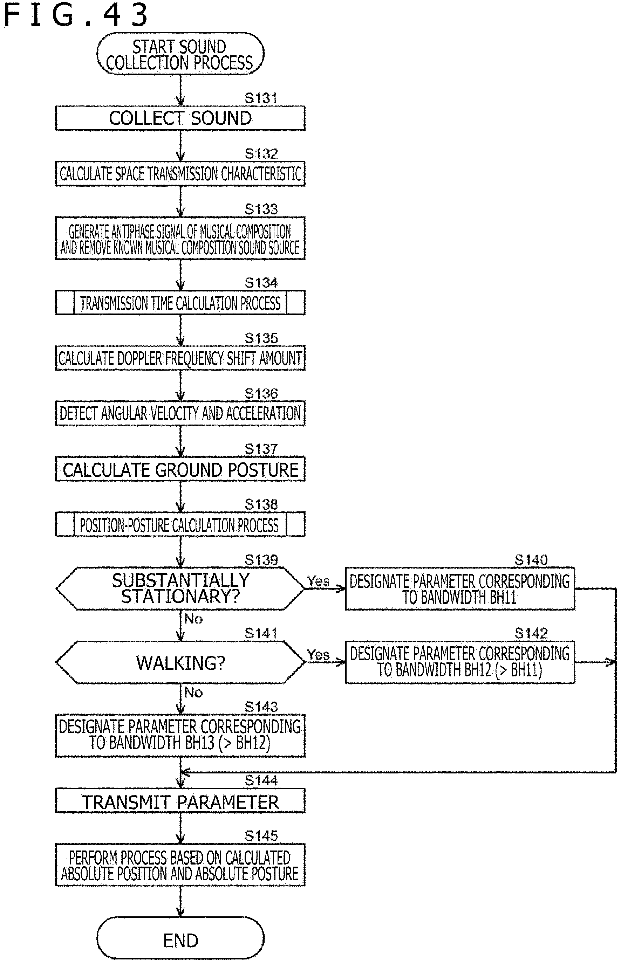

FIG. 43 is a flowchart explaining a sound collection process performed by the electronic apparatus in FIG. 41.

[FIG. 44]

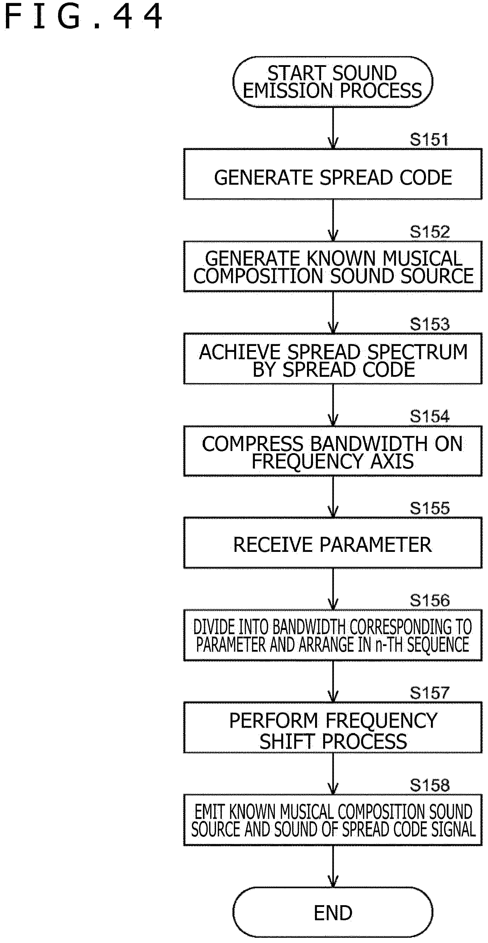

FIG. 44 is a flowchart explaining a sound emission (output) process performed by the sound output blocks in FIG. 40.

[FIG. 45]

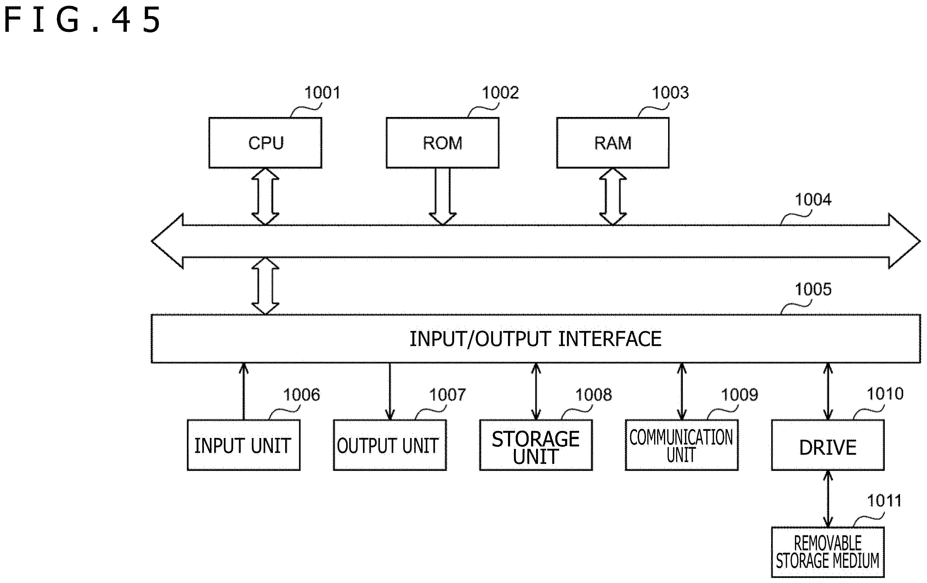

FIG. 45 depicts a configuration example of a general-purpose computer.

[Description of Embodiments]

Preferred embodiments of the present disclosure will be hereinafter described in detail with reference to the accompanying drawings. Note that constituent elements having substantially identical functional configurations are given identical reference signs in the present description and the drawings to omit repetitive description.

Modes for carrying out the present technology will be hereinafter described. The description will be presented in the following order.

1. First embodiment
2. First application example of first embodiment
3. Second application example of first embodiment
4. Third application example of first embodiment
5. Fourth application example of first embodiment
6. Second embodiment
7. First modification of second embodiment
8. Second modification of second embodiment
9. Application example of second embodiment
10. Example executed by software

<<1. First embodiment>>

<Configuration example of home audio system of first embodiment>

The present disclosure particularly enables measurement of a position and a posture by using sound without bringing discomfort to a user.

FIG. 1 depicts a configuration example of a home audio system of a first embodiment to which the technology of the present disclosure is applied.

A home audio system 11 in FIG. 1 includes a display device 30 such as a TV (television receiver), sound output blocks 31-1 to 31-4, and an electronic apparatus 32. Note that each of the audio output blocks 31-1 to 31-4 will be hereinafter simply referred to as a sound output block 31 unless distinction between these blocks is particularly needed. This term will be applied to other configurations.

Each of the sound output blocks 31-1 to 31-4 has a speaker, and emits a mixture of sound associated with music content, a game, or the like, and sound including a modulation signal obtained by applying spread spectrum modulation on the basis of a spread code to a data code for identifying a position of the electronic apparatus 32.

The electronic apparatus 32 is an apparatus carried by or attached to a user, such as a smartphone and an HMD (Head Mounted Display) used as a game controller.

The electronic apparatus 32 includes a sound input block 41 which has a sound input unit 51 for receiving sound output from each of the sound output blocks 31-1 to 31-4, such as a microphone, and an IMU (Inertial Measurement Unit) 52.

The sound input block 41 recognizes, beforehand, positions of the display device 30 and the respective sound output blocks 31-1 to 31-4 within a space as known position information, and obtains, using the sound input unit 51, a distance to each of the sound output blocks 31-1 to 31-4 on the basis of each of modulation signals contained in sound emitted from the sound output blocks 31 to detect the own position with respect to the sound output blocks 31-1 to 31-4 as an absolute position. Moreover, the sound input block 41 detects an absolute speed of the electronic apparatus 32 on the basis of a Doppler frequency shift amount of the sound emitted from each of the sound output blocks 31.

Furthermore, the sound input block 41 identifies the own ground posture on the basis of angular velocity and acceleration detected by the IMU 52 and the absolute speed.

In this manner, in a case where the electronic apparatus 32 is an HMD including a see-through display unit, for example, movement of the head of the user wearing the HMD as the electronic apparatus 32 is trackable.

Accordingly, for example, the user wearing the HMD can view an image displayed on the display device 30 and a VR image directly displayed on the see-through display unit as superimposed images through the see-through display unit of the HMD.

As a result, for example, the user can view such an image from which a character presented in the VR image pops out from the image displayed on the display device 30.

Moreover, sound can be output from each of the sound output blocks 31-1 to 31-4 with correction of localization of a sound field according to the identified position and posture of the HMD as the electronic apparatus 32 with respect to each of the sound output blocks 31-1 to 31-4. Accordingly, the user is allowed to hear and view sound offering realism according to the movement of the head.

Furthermore, in a case where the electronic apparatus 32 is a smartphone used as a game controller, an operation for beating an opponent character displayed on the display device 30 is achievable by pointing the electronic apparatus 32 constituted by the smartphone and functioning as the game controller to the opponent character, for example.

In addition, a pointer displayed on the display device 30 may be operated or caused to function as a remote controller for the display device 30, for example, according to movement of the electronic apparatus 32 relative to the display device 30.

<Configuration example of sound output block of first embodiment>

A configuration example of the sound output blocks 31 according to the first embodiment will be subsequently described with reference to FIG. 2.

Each of the sound output block 31 includes a spread code generation unit 71, a known musical composition sound source generation unit 72, a sound generation unit 73, and a sound output unit 74.

The spread code generation unit 71 generates a spread code and outputs the generated spread code to the sound generation unit 73.

The known musical composition sound source generation unit 72 storing a known musical composition generates a known musical composition sound source on the basis of the stored known musical composition, and outputs the generated known musical composition sound source to the sound generation unit 73.

The sound generation unit 73 applies spread spectrum modulation to a known musical composition sound source on the basis of a spread code to generate sound including a spread spectrum modulation signal, and outputs the generated sound to the sound output unit 74.

More specifically, the sound generation unit 73 includes a spread unit 81, a frequency shift processing unit 82, and a sound field control unit 83.

The spread unit 81 applies spread spectrum modulation to the known musical composition sound source on the basis of the spread code to generate a spread spectrum signal.

The frequency shift processing unit 82 shifts a frequency of the spread code of the spread spectrum signal to a frequency band difficult to perceive by human ears.

The sound field control unit 83 reproduces a sound field according to a positional relation with the sound field control unit 83 on the basis of information supplied from the electronic apparatus 32 and indicating a position of the electronic apparatus 32.

For example, the sound output unit 74 is a speaker and outputs a known musical composition sound source supplied from the sound generation unit 73 and sound corresponding to the spread spectrum signal.

<Configuration example of electronic apparatus>

A configuration example of the electronic apparatus 32 will be subsequently described with reference to FIG. 3.

The electronic apparatus 32 includes the sound input block 41, a control unit 42, and an output unit 43.

The sound input block 41 receives input of sound emitted from each of the sound output blocks 31-1 to 31-4, calculates a distance from each of the sound output blocks 31-1 to 31-4 on the basis of a correlation between a spread spectrum signal of the received sound and a spread code, obtains the own absolute position and the own absolute posture on the basis of each of the distances thus obtained, and outputs the absolute position and the absolute posture to the control unit 42.

In a case where the electronic apparatus 32 is a smartphone functioning as a game controller, the control unit 42 causes the output unit 43 functioning as a communication unit, for example, to transmit a command for setting a sound field corresponding to the absolute position and the absolute posture of the electronic apparatus 32 to each of the sound output blocks 31-1 to 31-4 on the basis of the absolute position and the absolute posture supplied from the sound input block 41 and associated with the electronic apparatus 32.

In this case, the sound field control unit 83 of each of the sound output blocks 31-1 to 31-4 adjusts the sound output from the sound output unit 74 according to the command transmitted from the electronic apparatus 32 as a command for setting the sound field so as to provide an optimum sound field for a user carrying the electronic apparatus 32.

Moreover, in a case where the electronic apparatus 32 is configured to function as an HMD, the control unit 42 causes the output unit 43 functioning as a see-through display unit for displaying a VR image to display a VR image corresponding to the absolute position and the absolute posture supplied from the sound input block 41 and associated with the electronic apparatus 32.

More specifically, the sound input block 41 includes the sound input unit 51, the IMU (Inertial Measurement Unit) 52, a known musical composition sound source removal unit 91, a space transmission characteristic calculation unit 92, a transmission time calculation unit 93, a Doppler frequency shift calculation unit 94, and a position-posture calculation unit 95.

For example, the sound input unit 51 is a microphone which collects sound emitted from each of the sound output blocks 31-1 to 31-4, and outputs the collected sound to the known musical composition sound source removal unit 91 and the space transmission characteristic calculation unit 92.

The space transmission characteristic calculation unit 92 calculates a space transmission characteristic on the basis of information supplied from the sound input unit 51 and associated with sound, a characteristic of the microphone constituting the sound input unit 51, and a characteristic of each of the speakers constituting the sound output units 74 of the sound output blocks 31, and outputs the calculated space transmission characteristic to the known musical composition sound source removal unit 91.

The known musical composition sound source removal unit 91 stores a musical composition sound source stored in the known musical composition sound source generation unit 72 of each of the sound output blocks 31 beforehand as a known musical composition sound source.

In addition, the known musical composition sound source removal unit 91 removes a component of the known musical composition sound source from sound supplied from the sound input unit 51 while considering the space transmission characteristic supplied form the space transmission characteristic calculation unit 92, and outputs the resultant known musical composition sound source to the transmission time calculation unit 93 and the Doppler frequency shift calculation unit 94.

Specifically, the known musical composition sound source removal unit 91 removes the component of the known musical composition sound source from the sound collected by the sound input unit 51, and outputs only a component of a spread spectrum signal to the transmission time calculation unit 93 and the Doppler frequency shift calculation unit 94.

The transmission time calculation unit 93 calculates each transmission time required from sound emission from the corresponding one of the sound output blocks 31-1 to 31-4 to sound collection on the basis of the spread spectrum signal component contained in the sound collected by the sound input unit 51, and outputs the calculated transmission time to the position-posture calculation unit 95.

Note that a method for calculating the transmission time will be described below in detail with reference to FIGS. 5 to 13.

The Doppler frequency shift calculation unit 94 calculates a Doppler frequency shift amount generated according to the moving speed of the electronic apparatus 32 on the basis of a frequency of sound emitted from each of the sound output blocks 31, and a frequency of sound actually collected by the sound input unit 51, and outputs the calculated Doppler frequency shift amount to the position-posture calculation unit 95.

The IMU 52 detects angular velocity and acceleration and outputs these to a ground posture calculation unit (AHRS) 96.

The ground posture calculation unit (AHRS: Attitude Heading Reference System) 96 calculates information (Roll and Pitch) associated with a ground posture of the electronic apparatus 32 on the basis of the angular velocity and the acceleration supplied from the IMU 52, and outputs the calculated information to the position-posture calculation unit 95.

The position-posture calculation unit 95 obtains an absolute position and an absolute posture of the electronic apparatus 32 on the basis of each transmission time supplied from the transmission time calculation unit 93 and associated with the sound output blocks 31-1 to 31-4, the Doppler shift amount supplied from the Doppler frequency shift calculation unit 94, and the information (Roll and Pitch) associated with the ground posture of the electronic apparatus 32 and supplied from the ground posture calculation unit (AHRS) 96, and outputs the absolute position and the absolute posture thus obtained to the control unit 42.

Note that a detailed configuration of the position-posture calculation unit 95 will be described below with reference to FIG. 4.

<Configuration example of position-posture calculation unit>

A configuration example of the position-posture calculation unit 95 will be subsequently described with reference to FIG. 4.

The position-posture calculation unit 95 includes an absolute position calculation unit 111, a Doppler speed calculation unit 112, and an absolute posture calculation unit 113.

The absolute position calculation unit 111 calculates each distance to the sound output blocks 31-1 to 31-4 from the electronic apparatus 32 on the basis of each transmission time of the sound output blocks 31-1 to 31-4, and calculates a position of the electronic apparatus 32 relative to each of the sound output blocks 31-1 to 31-4 as an absolute position (X, Y, Z) on the basis of information indicating the calculated distances.

Note that a method for calculating the absolute position of the electronic apparatus 32 will be described below in detail with reference to FIG. 13.

The Doppler speed calculation unit 112 calculates a moving speed (Doppler speed) of the electronic apparatus 32 in an absolute direction as an absolute speed (VX, VY, VZ) on the basis of a Doppler frequency shift amount which is a difference between a frequency of sound emitted from each of the sound output blocks 31 and a frequency of sound collected by the sound input unit 51, and outputs the calculated absolute speed to the absolute posture calculation unit 113.

Specifically, the frequency of the sound emitted from each of the sound output blocks 31 and the frequency of the sound collected by the sound input unit 51 are equivalent to each other in a case where the electronic apparatus 32 does not move. However, in a case where the electronic apparatus 32 moves, the sound input unit 51 collects sound at a frequency to which a Doppler frequency shift has been caused according to the moving speed of the electronic apparatus 32.

Accordingly, the Doppler speed calculation unit 112 obtains the Doppler speed on the basis of this Doppler frequency shift amount, and designates this obtained Doppler speed as an absolute speed of the moving speed of the electronic apparatus 32.

The absolute posture calculation unit 113 calculates an absolute posture on the basis of the absolute speed as the Doppler speed supplied from the Doppler speed calculation unit 112 and the ground posture supplied from the ground posture calculation unit 96.

More specifically, the absolute posture calculation unit 113 which includes a Kalman filter or the like calculates such an absolute posture (Roll, Pitch, Yaw) in such a manner that both a posture change obtained from the absolute speed and a ground posture change correspond to each other, and outputs the calculated absolute posture.

<Principle of communication using spread code>

A principle of communication using a spread code will be subsequently described with reference to FIG. 5.

The spread unit 81 on the transmission side in a left part of the figure applies spread spectrum modulation to an input signal Di having a pulse width Td and corresponding to a transmission target by multiplying the input signal Di by a spread code Ex to generate a transmission signal De having a pulse width Tc, and transmits the generated transmission signal De to the reception side in a right part of the figure.

At this time, in a case where a frequency band Dif of the input signal Di is represented by a frequency band ranging from -1/Td to 1/Td, for example, a frequency band Exf of the transmission signal De is widened to a frequency band ranging from -1/Tc to 1/Tc (1/Tc > 1/Td) according to multiplication by the spread code Ex. Accordingly, energy is spread on a frequency axis.

Note that FIG. 5 depicts an example where an interfering wave IF interferes with the transmission signal De.

On the reception side, the transmission signal De subjected to interference by the interfering wave IF is received as a reception signal De'.

The transmission time calculation unit 93 (cross-correlation calculation unit 131 (FIG. 8) of the transmission time calculation unit 93) applies despread to the reception signal De' by using the same spread code Ex to restore a reception signal Do.

At this time, a frequency band Exf' of the reception signal De' contains a component IFEx of the interfering wave. However, energy is spread in a frequency band Dof of the despread reception signal Do as a result of restoration of a frequency band IFD where the component IFEx of the interfering wave is spread. Accordingly, an effect of the interfering wave IF on the reception signal Do can be reduced.

In other words, as described above, the effect of the interfering wave IF caused in a transfer path of the transmission signal De can be reduced in a case of communication using the spread code. Accordingly, noise immunity can improve.

Moreover, for example, the spread code has an impulse-shaped autocorrelation as indicated by a waveform diagram in an upper part of FIG. 6, and has no cross-correlation as indicated by a waveform in a lower part of FIG. 6. Note that FIG. 6 depicts a change of a correlation value in a case where a Gold-sequence is used as the spread code. A horizontal axis represents a coding sequence, while a vertical axis represents a correlation value.

Accordingly, the sound input block 41 is capable of recognizing a spectrum signal contained in sound with appropriate distinction between the sound output blocks 31-1 to 31-4 by setting a spread code having high randomness for each of the sound output blocks 31-1 to 31-4.

The spread code is not limited to the Gold-sequence, but may be an M-sequence, PN (Pseudorandom Noise), or the like.

<Transmission time calculation method by transmission time calculation unit>

The sound input block 41 observes a peak of a cross-correlation at timing when sound emitted from each of the sound output blocks 31 is collected by the sound input block 41. Accordingly, this timing varies according to each distance between the sound input block 41 and the sound output blocks 31.

Specifically, suppose that a peak is detected at a time T1 as depicted in a left part of FIG. 7 in a state where a distance between the sound input block 41 and any one of the sound output blocks 31 is a first distance, for example. In this case, a peak is observed at a time T2 (> T1) as depicted in a right part of FIG. 7 when a distance between the sound input block 41 and a different one of the sound output blocks 31 is a second distance longer than the first distance.

Note that a horizontal axis in FIG. 7 represents an elapsed time after output of sound from the sound output block 31 and that a vertical axis represents strength of a cross-correlation.

Specifically, each distance between the sound input block 41 and the sound output blocks 31 can be calculated by multiplying a time required from sound emission from the corresponding sound output block 31 until observation of a peak in the cross-correlation, i.e., a transmission time required from sound emission from the corresponding sound output block 31 until collection of the sound by the sound input block 41, by a sound speed.

<Configuration example of transmission time calculation unit>

A configuration example of the transmission time calculation unit 93 will be subsequently described with reference to FIG. 8.

The transmission time calculation unit 93 includes a reverse shift processing unit 130, a cross-correlation calculation unit 131, and a peak detection unit 132.

The reverse shift processing unit 130 restores a spread code signal, which is included in a sound signal collected by the sound input unit 51 and is obtained by spread spectrum modulation and up-sampling for a frequency shift by the frequency shift processing unit 82 of the corresponding sound output block 31, to a signal in an original frequency band by down-sampling, and outputs the restored signal to the cross-correlation calculation unit 131.

Note that details of the frequency band shift achieved by the frequency shift processing unit 82, and the restoration of the frequency band achieved by the reverse shift processing unit 130 will be described below with reference to FIG. 10.

The cross-correlation calculation unit 131 calculates a cross-correlation between a spread code and a reception signal obtained by removing a known musical composition sound source from the sound signal collected by the sound input unit 51 of the sound input block 41, and outputs the calculated cross-correlation to the peak detection unit 132.

The peak detection unit 132 detects a time of a peak in the cross-correlation calculated by the cross-correlation calculation unit 131, and outputs the detected time as a transmission time.

The calculation of the cross-correlation achieved by the cross-correlation calculation unit 131 herein is generally known as calculation requiring a considerably large calculation volume, and therefore is achieved by equivalent calculation which requires only a small calculation volume.

Specifically, the cross-correlation calculation unit 131 applies Fourier-transform to a transmission signal of sound output from the sound output unit 74 of each of the sound output blocks 31, and a reception signal obtained by removing a known musical composition sound source from a sound signal received by the sound input unit 51 of the sound input block 41 as expressed in the following equations (1) and (2).

[Math. 1]

$$G(f) = \int_{-\infty}^{\infty} g\left(\frac{V-v}{V}t\right) \exp(-i2\pi ft)\,dt \qquad \cdot\cdot\cdot \quad (1)$$

[Math. 2]

$$H(f) = \int_{-\infty}^{\infty} h(t) \exp(-i2\pi ft)\,dt \qquad \cdot\cdot\cdot \quad (2)$$

In these equations, g represents a reception signal obtained by removing a known musical composition sound source from a sound signal received by the sound input unit 51 of the sound input block 41, while G is a result of Fourier transform of the reception signal g obtained by removing the known musical composition sound source from the sound signal received by the sound input unit 51 of the sound input block 41.

Moreover, h is a transmission signal of sound output from the sound output unit 74 of the corresponding sound output block 31, while H is a result of Fourier transform of the transmission signal of the sound output from the sound output unit 74 of each of the sound output blocks 31.

Furthermore, V is a sound speed, v is a speed of the electronic apparatus 32 (the sound input unit 51 of the electronic apparatus 32), t is a time, and f is a frequency.

Subsequently, the cross-correlation calculation unit 131 multiplies the results G and H of Fourier transform by each other to obtain a cross-spectrum as expressed in the following equation (3).

[Math. 3]

$$P(f) = G(f)H(f) \qquad \cdot\cdot\cdot \quad (3)$$

In this equation, P is a cross-spectrum obtained by multiplying the results G and H of Fourier transform by each other.

Thereafter, as expressed in the following equation (4), the cross-correlation calculation unit 131 applies inverse Fourier-transform to the cross-spectrum P to obtain a cross-correlation between the transmission signal h of the sound output from the sound output unit 74 of the corresponding sound output block 31, and the reception signal g obtained by removing the known musical composition sound source from the sound signal received by the sound input unit 51 of the sound input block 41.

[Math. 4]

$$p(t) = \int_{-\infty}^{\infty} P(t) \exp(-i2\pi ft)\,df \qquad \cdots \quad (4)$$

In this equation, p is a cross-correlation between the transmission signal h of the sound output from the sound output unit 74 of the corresponding sound output block 31, and the reception signal g obtained by removing the known musical composition sound source from the sound signal received by the sound input unit 51 of the sound input block 41.

Thereafter, the following equation (5) is calculated on the basis of a transmission time T obtained from a peak of the cross-correlation p to obtain each distance between the sound input block 41 and the sound output blocks 31.

[Math. 5]

$$D = T \times V$$

$$\cdots \quad (5)$$

In this equation, D is a distance between the sound input block 41 (the sound input unit 51 of the sound input block 41) and the corresponding sound output block 31 (the sound output unit 74 of the sound output block 31), T is a transmission time, and V is a sound speed. In addition, the sound speed V is $331.5 + 0.6 \times Q$ (m/s) (Q: temperature °C), for example.

Note that the cross-correlation calculation unit 131 may further obtain the speed v of the electronic apparatus 32 (the sound input unit 51 of the electronic apparatus 32) by obtaining the cross-correlation p.

More specifically, the cross-correlation calculation unit 131 obtains the cross-correlation p while changing the speed v in a predetermined range (e.g., -1.00 to 1.00 m/s) by a predetermined step (e.g., 0.01 m/s step), and obtains the speed v indicating a maximum peak of the cross-correlation p as the speed v of the electronic apparatus 32 (the sound input unit 51 of the electronic apparatus 32).

An absolute speed of the electronic apparatus 32 (the sound input block 41 of the electronic apparatus 32) can be obtained on the basis of the speed v obtained for each of the sound output blocks 31-1 to 31-4.

<Frequency shift>

A frequency band of a spread code signal corresponds to a Nyquist frequency Fs which is a half of a sampling frequency. In a case where the Nyquist frequency Fs is 8 kHz, for example, the frequency band of the spread code signal is a frequency band in a range lower than the Nyquist frequency Fs, i.e., in a range from 0 to 8 kHz.

Meanwhile, as depicted in FIG. 9, it is known that a human sense of hearing has high sensitivity to sound in a frequency band around 3 kHz, decreases from approximately 10 kHz, and has substantially no sensitivity at frequencies exceeding 20 kHz, regardless of a loudness level.

FIG. 9 illustrates a change of a sound pressure level for each frequency at loudness levels 0, 20, 40, 60, 80, and 100 phons. A horizontal axis represents a frequency, and a vertical axis represents a sound pressure level. Note that a thick one-dot chain line represents a sound pressure level of a microphone and indicates that the sound pressure level of the microphone is fixed regardless of the loudness level.

Accordingly, in a case where a frequency band of a spread spectrum signal ranges from 0 to 8 kHz, sound of a spread spectrum signal emitted along with sound of a known musical composition sound source may be sensed as noise by the human sense of hearing.

For example, assuming that a musical composition is reproduced at -50 dB, a range below a sensitivity curve L in FIG. 10 is recognized as a range Z1 unperceivable by humans (a range difficult to recognize by the human sense of hearing), while a range above the sensitivity curve L is recognized as a range Z2 perceivable by humans (a range easily recognizable by the human sense of hearing).

Note that a horizontal axis in FIG. 10 represents a frequency band and that a vertical axis represents a sound pressure level.

Accordingly, assuming that a range where sound of a known musical composition sound source to be reproduced is separable from sound of a spread code signal is a range within -30 dB, for example, sound of a spread code signal becomes unperceivable by humans (difficult to be recognized by the human sense of hearing) when output in a range from 16 to 24 kHz as indicated by a range Z3 within the range Z1.

Accordingly, as illustrated in a middle left part of FIG. 11, the frequency shift processing unit 82 applies m-times up-sampling to a spread code signal Fs containing a spread code and illustrated in an upper left part of FIG. 11 to generate spread code signals Fs, 2Fs, ... mFs.

Thereafter, as illustrated in a lower left part of FIG. 11, the frequency shift processing unit 82 limits the frequency band of a spread code signal uFs to the range from 16 to 24 kHz, which is a frequency band unperceivable by humans as described with reference to FIG. 10 to shift the frequency of the spread code signal Fs containing the spread code signal, and causes the sound output unit 74 to emit the spread code signal Fs along with the known musical composition sound source.

As illustrated in a lower right part of FIG. 11, the reverse shift processing unit 130 limits the frequency band of the sound, which is the sound obtained after the known musical composition sound source removal unit 91 removes the known musical composition sound source from sound collected by the sound input unit 51, to the range from 16 to 24 kHz. In this manner, the reverse shift processing unit 130 extracts the spread code signal uFs as illustrated in a middle right part of FIG. 11.

Thereafter, as illustrated in an upper right part of FIG. 10, the reverse shift processing unit 130 generates the spread code signal Fs containing the spread code by applying 1/m down-sampling to restore the frequency band to the original band.

By performing the frequency shift in this manner, it is possible to set sound containing a spread code signal to a state of not being easily perceivable (difficult to recognize by the human sense of hearing) even if the sound containing the spread code signal is emitted in a state where sound of a known musical composition sound source is emitted.

Note that described above has been the example where sound containing a spread code signal is made not easily perceivable for humans (made difficult to recognize by the human sense of hearing) by the frequency shift. However, considering that sound at a high frequency has high straightness and is easily affected by multipath caused by reflection on a wall or the like, or sound shielding by a shield, it is preferable to further use sound in a lower band, which is 10 kHz or lower where diffraction is easily caused, containing a low frequency band around 3 kHz, for example.

For dealing with such a case, a sound pressure level of a known musical composition sound source is set to -50 dB, and a range necessary for separation is set up to -30 dB, for example. In this condition, sound emission may be achieved while making a spread code signal unperceivable by applying auditory masking to the spread code signal with use of a known musical composition on the basis of a method for auditory compression used by ATRAC (registered trademark), MP3 (registered trademark), and the like.

More specifically, a frequency component of a musical composition to be reproduced may be analyzed for every predetermined reproduction unit time (e.g., unit of 20 ms), and a sound pressure level of sound of a spread code signal for each critical band (24 bark) may be dynamically increased or reduced according to an analysis result in such a manner as to achieve auditory masking.

<Manner of obtaining absolute position of electronic apparatus>

Subsequently described will be a manner of obtaining an absolute position of the electronic apparatus 32 (a sound input unit 51-i of the electronic apparatus 32) on the basis of a distance Dik between the electronic apparatus 32 (the sound input unit 51-i of the electronic apparatus 32) and a sound output block 31-k.

It is assumed herein that each position of the sound output blocks 31 (the sound output units 74 of the sound output blocks) is known.

For example, it is assumed that the following arrangement is set as depicted in FIG. 13. The sound output block 31-1 (the sound output unit 74-1 of the sound output block 31-1) is located at a position (X1, Y1, Z1). The sound output block 31-2 (the sound output unit 74-2 of the sound output block 31-2) is located at a position (X2, Y2, Z2). The sound output block 31-3 (the sound output unit 74-3 of the sound output block 31-3) is located at a position (X3, Y3, Z3). The sound output block 31-4 (the sound output unit 74-4 of the sound output block 31-4) is located at a position (X4, Y4, Z4).

Moreover, it is assumed that a sound input unit 51-1 (of a sound input block 41-1 of an electronic apparatus 32-1) is located at a position (x1, y1, z1), and that a sound input unit 51-2 (of a sound input block 41-2 of an electronic apparatus 32-2) is located at a position (x2, y2, z2).

These assumptions can be generalized in the following manner. The sound output block 31-k (a sound output unit 74-k of the sound output block 31-k) is located at a position (Xk, Yk, Zk), and the sound input unit 51-i (of a sound input block 41-i of an electronic apparatus 32-i) is located at a position (xi, yi, zi).

In this case, the distance Dik between the sound output block 31-k (the sound output unit 74-k of the sound output block 31-k) and the sound input unit 51-i (of the sound input block 41-i of the electronic apparatus 32-i) is expressed by the following equation (6).
[Math. 6]

$$\sqrt{(x_i - XK)^2 + (y_i - YK)^2 + (z_i - ZK)^2} + D_s = Dik \qquad \cdots \quad (6)$$

In this equation, Ds represents a distance offset corresponding to a system delay between the corresponding sound output block 31 and the sound input block 41.

Accordingly, for obtaining respective distances Di1 to Di4 between the sound input unit 51-i (of the sound input block 41-i of the electronic apparatus 32-i) and the respective sound output blocks 31-1 to 31-4 (the sound output units 74-1 to 74-4 of the sound output blocks 31-1 to 31-4), respectively, the absolute position $(x_i, y_i, z_i)$ of the sound input unit 51-i (of the sound input block 41-i of the electronic apparatus 32-i) required for obtaining these distances can be calculated by simultaneous equations expressed by the following equation (7). [Math. 7]

$$\sqrt{(x_i - X1)^2 + (y_i - Y1)^2 + (z_i - Z1)^2} + D_s = Di1$$
$$\sqrt{(x_i - X2)^2 + (y_i - Y2)^2 + (z_i - Z2)^2} + D_s = Di2$$
$$\sqrt{(x_i - X3)^2 + (y_i - Y3)^2 + (z_i - Z3)^2} + D_s = Di3 \qquad \cdots \quad (7)$$
$$\sqrt{(x_i - X4)^2 + (y_i - Y4)^2 + (z_i - Z4)^2} + D_s = Di4$$

Note that three unknowns are present in a case where the distance offset Ds corresponding to a time offset caused by the operation delay is known in the example described above. In this case, three simultaneous equations are only required. Accordingly, the simultaneous equations can be calculated if the positions of the three sound output units 74 are known.

Moreover, in a case where there exist the two sound input units 51 (of the sound input blocks 41 of the electronic apparatus 32) whose relative positions to each other are known, four equations acquired from the respective distances D between the two sound input units 51 and the two sound output blocks 31 (the sound output units 74 of the two sound output blocks 31) are calculated on the basis of information associated with a positional relation between the two sound input units 51. In this manner, the absolute position $(x_i, y_i, z_i)$ of the sound input unit 51 (of the sound input block 41 of the electronic apparatus 32) can be obtained.

<Sound emission process>

A sound emission (output) process performed by each of the sound output blocks 31 will be subsequently described with reference to a flowchart in FIG. 14.

In step S11, the spread code generation unit 71 generates a spread code and outputs the generated spread code to the sound generation unit 73.

In step S12, the known musical composition sound source generation unit 72 generates a known musical composition sound source stored therein and outputs the generated musical composition sound source to the sound generation unit 73.

In step S13, the sound generation unit 73 causes the spread unit 81 to achieve spread spectrum modulation by multiplying a predetermined data code by a spread code to generate a spread code signal.

In step S14, the sound generation unit 73 causes the frequency shift processing unit 82 to shift a frequency of the spread code signal as described with reference to the left part of FIG. 11.

In step S15, the sound generation unit 73 outputs the known musical composition sound source and the frequency-shifted spread code signal to the sound output unit 74 including a speaker, and causes the sound output unit 74 to emit (output) these sound source and signal as sound.

By the foregoing processes executed by each of the sound output blocks 31-1 to 31-4, sound corresponding to the known musical composition sound source is allowed to be emitted to and heard and viewed by a user carrying the electronic apparatus 32.

Moreover, the spread code signal is allowed to be shifted to a frequency band unperceivable by a human corresponding to the user and output as sound. Accordingly, the electronic apparatus 32 is capable of measuring each distance to the sound output blocks 31 on the basis of the emitted sound including the spread code signal and shifted to the frequency band unperceivable by humans without causing the user to hear uncomfortable sound.

<Sound collection process>

A sound collection process performed by the electronic apparatus 32 will be subsequently described with reference to a flowchart in FIG. 15.

In step S31, the sound input unit 51 including a microphone collects sound and outputs the collected sound to the known musical composition sound source removal unit 91 and the space transmission characteristic calculation unit 92.

In step S32, the space transmission characteristic calculation unit 92 calculates a space transmission characteristic on the basis of the sound supplied from the sound input unit 51, a characteristic of the sound input unit 51, and a characteristic of the sound output unit 74 of each of the sound output blocks 31, and outputs the calculated space transmission characteristic to the known musical composition sound source removal unit 91.

In step S33, the known musical composition sound source removal unit 91 generates an antiphase signal of the known musical composition sound source while considering the space transmission characteristic supplied from the space transmission characteristic calculation unit 92, removes a component of the known musical composition sound source from the sound supplied from the sound input unit 51, and outputs the resultant sound to the transmission time calculation unit 93 and the Doppler frequency shift calculation unit 94.

In step S34, the transmission time calculation unit 93 executes a transmission time calculation process to calculate each transmission time required for sound output from the sound output blocks 31 to reach the sound input unit 51.

<Transmission time calculation process>

The transmission time calculation process performed by the transmission time calculation unit 93 will be described herein with reference to a flowchart in FIG. 16.

In step S51, as in the manner described with reference to the right part of FIG. 11, the reverse shift processing unit 130 reversely shifts a frequency band of a spread code signal supplied from the known musical composition sound source removal unit 91 and obtained by removing a known musical composition sound source from sound input by the sound input unit 51.

In step S52, the cross-correlation calculation unit 131 calculates each cross-correlation between the spread code signal obtained by removing the known musical composition sound source from the sound input from the sound input unit 51 and reversely shifting of the frequency band, and spread code signals of sound output from the sound output blocks 31, by calculations using the equations (1) to (4) described above.

In step S53, the peak detection unit 132 detects a peak in the calculated cross-correlation.

In step S54, the peak detection unit 132 designates a time corresponding to the detected peak in the cross-correlation as a transmission time, and outputs the transmission time to the position-posture calculation unit 95.

Note that the transmission time is obtained for each of the multiple sound output blocks 31 by calculation of each of the cross-correlations with the spread code signals of the sound output from the multiple sound output blocks 31.

The description herein returns to the flowchart in FIG. 15.

In step S35, the Doppler frequency shift calculation unit 94 obtains each shift amount between the frequency of the spread code signal obtained by removing the known musical composition sound source from the sound input by the sound input unit 51, and the frequencies of the spread code signals of the sound output from the sound output blocks 31 and outputs the obtained shift amounts to the position-posture calculation unit 95.

In step S36, the IMU 52 detects angular velocity and acceleration of the electronic apparatus 32, and outputs these to the ground posture calculation unit 96.

In step S37, the ground posture calculation unit 96 calculates a ground posture (Roll and Pitch) on the basis of the angular velocity and the acceleration supplied from the IMU 52, and outputs the calculated posture to the position-posture calculation unit 95.

In step S38, the position-posture calculation unit 95 executes a position-posture calculation process to calculate and output an absolute position and an absolute posture of the electronic apparatus 32.

<Position-posture calculation process>

The position-posture calculation process performed by the position-posture calculation unit 95 will be described herein with reference to a flowchart in FIG. 17.

In step S71, the absolute position calculation unit 111 calculates each distance to the sound output blocks 31-1 to 31-4 on the basis of each transmission time of the sound output blocks 31-1 to 31-4 as described with reference to the equation (5) described above.

In step S72, the absolute position calculation unit 111 calculates an absolute position of the electronic apparatus 32 on the basis of known position information indicating the sound output blocks 31-1 to 31-4 and each distance from the sound output blocks 31-1 to 31-4 as described with reference to the equation (7) described above, and outputs the calculated absolute position to the control unit 42.

In step S73, the Doppler speed calculation unit 112 calculates an absolute speed of the electronic apparatus 32 on the basis of each Doppler frequency shift amount of the sound output from the sound output blocks 31-1 to 31-4 and each pieces of known position information, and outputs the calculated absolute speed to the absolute posture calculation unit 113.

In step S74, the absolute posture calculation unit 113 calculates such an absolute posture (Roll, Pitch, Yaw) of the electronic apparatus 32 in such a manner that a posture change based on the absolute speed of the electronic apparatus 32 supplied from the Doppler speed calculation unit 112 corresponds to a posture change of the ground posture of the electronic apparatus 32 supplied from the ground posture calculation unit 96, and outputs the calculated absolute posture to the control unit 42.

By the processes described above, sound including the spread code signal is output from each of the sound output blocks 31. The absolute position and the absolute posture of the electronic apparatus 32 are thus obtained and output in real time on the basis of this sound. Accordingly, an absolute position and an absolute posture of the user carrying or wearing the electronic apparatus 32 are constantly acquirable in real time according to movement of the user.

Note that the absolute speed of the electronic apparatus may be obtained from a speed corresponding to a maximum peak in the cross-correlation.

The description herein returns to the flowchart in FIG. 15.

In step S39, the control unit 42 executes processing based on the absolute position and the absolute posture of the electronic apparatus 32 thus obtained to end the process.

For example, the control unit 42 controls the output unit 43 to transmit, to each of the sound output blocks 31-1 to 31-4, a command for controlling a level or timing of sound output from the sound output unit 74 of the corresponding one of the sound output blocks 31-1 to 31-4 so as to provide a sound field on the basis of the absolute position and the absolute posture of the electronic apparatus 32 thus obtained.

In this case, the sound field control unit 83 of each of the sound output blocks 31-1 to 31-4 controls the level and the timing of the sound output from the sound output unit 74 so as to provide a sound field corresponding to the absolute position and the absolute posture of the user carrying the electronic apparatus 32 on the basis of the command transmitted from the electronic apparatus 32.

By such a process, the user wearing the electronic apparatus 32 is allowed to listen to and view the musical composition output from the sound output blocks 31-1 to 31-4 in real time in an appropriate sound field corresponding to movement of the user.

Moreover, in a case where the electronic apparatus 32 is an HMD attached to the head of the user, content can be displayed on a see-through display unit while being overlapped with a display image of the display device 30 when the head of the user wearing the HMD is in such a direction where a display surface of the display device 30 in FIG. 1 is aligned with a visual line direction, for example.

As described above, the home audio system of the present disclosure emits a spread code signal by using sound in a frequency band that is not easily perceivable by humans, and measures a distance between the sound output blocks 31 and the electronic apparatus 32 including the sound input block 41 to obtain an absolute position and an absolute posture of the electronic apparatus 32 in real time.

In this manner, measurement of a position and a posture of the user carrying or wearing the electronic apparatus 32 is achievable in real time while allowing the user to appreciate music or the like by reproduction of a known musical composition sound source but preventing the user from hearing sound uncomfortable for the user.

Moreover, existing audio equipment is available for providing the speaker constituting the sound output unit 74 of each of the sound output blocks 31, and the microphone constituting the sound input unit 51 of the electronic apparatus 32, according to the present disclosure. Accordingly, low-cost implementation and simplification of labor associated with installation are achievable.

Furthermore, a handling target is sound, and existing audio equipment is available for this purpose. In this case, a necessity of authorization such as authentication required for use of radio waves or the like is eliminated. Accordingly, cost and labor required for use can be simplified also in this point.

Note that described above has been the example where the sound input block 41 calculates a space transmission characteristic by using the space transmission characteristic calculation unit 92 on the basis of sound collected by the sound input unit 51, and removes a known musical composition sound source from the collected sound by using the known musical composition sound source removal unit 91 on the basis of the space transmission characteristic to obtain a transmission time and a Doppler frequency shift amount on the basis of the sound obtained by removing the known musical composition sound source from the collected sound.

In this manner, detection accuracy of the transmission time and the Doppler frequency shift amount is improved by removing the known musical composition sound source from the collected sound. However, even in a state without removal of the known musical composition sound source, the transmission time and the Doppler frequency shift amount can be obtained with predetermined detection accuracy which, however, is lower than the detection accuracy of the above example.

Accordingly, for detecting the transmission time and the Doppler frequency shift amount, the processing performed by the known musical composition sound source removal unit 91 and the space transmission characteristic calculation unit 92 may be omitted within an allowable range of lowering of the detection accuracy, and the sound collected by the sound input unit 51 may be used without change to detect the transmission time and the Doppler frequency shift amount. In this manner, a processing load imposed on the sound input block 41 can be reduced.

Furthermore, for achieving simplification of the device configuration and cost reduction, the whole configurations of the known musical composition sound source removal unit 91 and the space transmission characteristic calculation unit 92 may be eliminated within an allowable range of lowering of the detection accuracy. Alternatively, only the configuration of the space transmission characteristic calculation unit 92 may be eliminated, and a typical space transmission characteristic may be applied for removing the known musical composition sound source by using the known musical composition sound source removal unit 91.

<<2. First application example of first embodiment>>

The example of the home audio system to which the technology of the present disclosure is applied as described above obtains in real time an absolute position and an absolute posture of the electronic apparatus 32 including the sound input block 41, and achieves an appropriate sound field by controlling sound output from each of the sound output blocks 31, or displays an image viewable while being overlapped with display contents of an external display device by controlling display on the see-through display unit of the HMD, on the basis of the absolute position and the absolute posture of the electronic apparatus 32 for both of these cases.

However, other functions may be achieved by using an absolute position and an absolute posture obtained from a positional relation with a sound source. For example, a configuration including two speakers and corresponding to the configuration of the sound output blocks 31 is installed on a seat of a moving vehicle, and a configuration corresponding to the configuration of the electronic apparatus 32 including the sound input block 41 is attached to each of positions near the left and right earholes of a driver corresponding to a user. In this manner, a noise cancelling system may be implemented by obtaining the absolute position and the absolute posture of the apparatuses each corresponding to the electronic apparatus 32 and controlling sound emitted from the configuration corresponding to the sound output blocks 31.

FIG. 18 depicts a configuration example of a noise cancelling system to which the technology of the present disclosure is applied.

A noise cancelling system 201 in FIG. 18 includes reference sensors 213-1 and 213-2 each identifying a position of a sound source 212 of noise, speakers 214-1 and 214-2 each fixed to a position near a head portion of an in-vehicle seat 211 on which a user H corresponding to a driver sits, and electronic apparatuses 215-1 and 215-2 including microphones provided at positions near left and right earholes of the user, respectively, to collect sound.

Each of the electronic apparatuses 215-1 and 215-2 has a configuration corresponding to the configuration of the electronic apparatus 32, while each of the speakers 214-1 and 214-2 has a configuration provided at a known position and corresponding to the configuration of the sound output blocks 31.

Absolute positions of the electronic apparatuses 215-1 and 215-2, i.e., the earholes of the user are identified by the speakers 214-1 and 214-2 and the electronic apparatuses 215-1 and 215-2.

Moreover, each of the reference sensors 213-1 and 213-2 is provided at a known fixed position to observe noise emitted from the noise source 212 and identify an absolute position of the noise source 212. In addition, as described above, the absolute positions and the absolute postures of the electronic apparatuses 215-1 and 215-2 are obtained in real time by the speakers 214-1 and 214-2 and the electronic apparatuses 215-1 and 215-2.

According to such a configuration, a manner in which noise emitted from the noise source 212 is perceived by the electronic apparatuses 215-1 and 215-2, i.e., both the ears of the user H is identified as a first transmission characteristic indicated by dotted lines.

Moreover, a manner in which sound emitted from each of the speakers 214-1 and 214-2 is perceived by the electronic apparatuses 215-1 and 215-2, i.e., both the ears of the user H is identified as a second transmission characteristic indicated by one-dot chain lines.

Thereafter, each of the speakers 214-1 and 214-2 reproduces and emits a musical composition sound source while emitting, on the basis of the second transmission characteristic, antiphase sound of noise corresponding to the noise generated from the noise source 212 heard and viewed by the user H on the basis of the first transmission characteristic. In this manner, the user H is allowed to hear and view only the musical composition in a noise-cancelled state.

<<3. Second application example of first embodiment>>

While described above has been the example where the one sound input block 41 is included in the electronic apparatus 32, the multiple sound input blocks 41 may be provided.

FIG. 19 depicts a configuration example of a game system which includes a game controller having the two sound input units 51.

A game system 251 in FIG. 19 includes sound output blocks 261-1 and 262-2, a display device 262, and an electronic apparatus 263 functioning as a game controller.

Each of the sound output blocks 261-1 and 261-2 has a configuration corresponding to the configuration of the sound output blocks 31.

The electronic apparatus 263 functioning as a game controller includes sound input blocks 271-1 and 271-2 each corresponding to the sound input block 41 and provided in a state of a fixed positional relation with each other.

In this case, absolute positions and absolute postures of the sound input blocks 271-1 and 271-2 are acquirable by using the sound output blocks 261-1 and 261-2 on the basis of a method similar to the method described above. Accordingly, an absolute position and an absolute posture of the electronic apparatus 263 functioning as a game controller are accurately detectable.

In such a configuration, a command issued from the electronic apparatus 263 functioning as a game controller is switchable according to the absolute position and the absolute posture and further an absolute speed of the electronic apparatus 263 functioning as a game controller. Accordingly, game play according to movement of the electronic apparatus 263 functioning as a game controller is enjoyable.

<<4. Third application example of first embodiment>>

The sound input block 41 is capable of accurately detecting an absolute position by using the multiple sound output blocks 31, and therefore is applicable to a navigation system, for example.

FIG. 20 is a configuration example of a navigation system to which the present disclosure is applied.

A navigation system 301 in FIG. 20 includes sound output blocks 331-1 to 331-8 and an electronic apparatus 332 including a sound input block.

Each of the sound output blocks 331-1 and 331-8 has a configuration corresponding to the configuration of the sound output blocks 31, while the electronic apparatus 332 has a configuration corresponding to the configuration of the electronic apparatus 32 including the sound input block 41.

The sound output blocks 331-1 to 331-8 are disposed at multiple indoor positions, for example. The electronic apparatus 332 is capable of accurately detecting an absolute position and an absolute posture as described above.

In this case, the absolute position and the absolute posture of the electronic apparatus 332 can be obtained as long as the four sound output blocks 331 and the electronic apparatus 332 are provided. If all the sound output blocks 331 are used, a processing load associated with an arithmetic process increases at the time of calculation required for acquiring a cross-correlation. Accordingly, information associated with all the sound output blocks 331 is not needed.

The cross-correlation is therefore acquired by providing a configuration capable of separately detecting a mutual schematic positional relation, such as a radio wave beacon (including Bluetooth (registered trademark (BT), WiFi, ultrawideband (UWB), and the like) for each of the sound output blocks 331-1 to 331-8 and the electronic apparatus 332, and using the electronic apparatus 332 and spread code signals of the limited sound output blocks 331 within a predetermined distance range. In this manner, reduction of the processing load is achievable according to reduction of a calculation volume associated with the cross-correlation.

In a case where the electronic apparatus 332 moves in an order of 332, 332', 332'', and 332'' ' each denoting the electronic apparatus as depicted in FIG. 20, the cross-correlation is calculated by using spread code signals of the sound output blocks limited to the four sound output blocks 331-1 to 331-4 when the electronic apparatus 332 is present within a range Z101-1, as indicated by the electronic apparatuses 332 and 332'. In this manner, reduction of the processing load is achievable by reduction of the calculation volume.

Meanwhile, the cross-correlation is similarly calculated by using spread code signals of the sound output blocks limited to the four sound output blocks 331-5 to 331-8 when the electronic apparatus 332 is present within a range Z101-2, as indicated by the electronic apparatuses 332" and 332"'. In this manner, reduction of the processing load is achievable by reduction of the calculation volume.

<<5. Fourth application example of first embodiment>>

A motion capture system may be practiced by providing a configuration which corresponds to the configuration of the electronic apparatus 32 including the sound input block 41 for each portion of the body of the user and acquiring an absolute position and an absolute posture of each portion of the body.

FIG. 21 is a configuration example of a motion capture system to which the present disclosure is applied.

A motion capture system 351 depicted in a right part of FIG. 21 includes sound output blocks 361-1 to 361-4 and an electronic apparatus 362. Each of the sound output blocks 361 herein has a configuration corresponding to the configuration of the sound output blocks 31, while the electronic apparatus 362 has a configuration corresponding to the configuration of the electronic apparatus 32 including the sound input block 41.

The electronic apparatus 362 herein is attached to each of tips of the left and right hands, tips of the left and right legs, the head, and the waist of a user H11 as indicated by electronic apparatuses 362-1 to 362-6 in a left part of FIG. 21.

In this state, the user H11 moves in a range where sound from each of the sound output blocks 361-1 to 361-4 can be heard and viewed. As a result, an absolute position and an absolute posture are detected in real time according to each motion of the tips of the left and right hands, the tips of the left and right legs, the head, and the waist of the user H11. Accordingly, a function of a motion capture system is achievable.

Therefore, for example, each motion of portions of the body of an artist during music live performance is detectable on the basis of motion capture by using speakers equipped in a live show venue as the sound output blocks 361-1 to 361-4 and attaching the electronic apparatus 362 to each portion of the body of the artist.

<<6. Second embodiment>>

<Outline of second embodiment>

Described in the above first embodiment has been the example which emits, as a transmission sound signal from each of the sound output blocks 31, sound including a spread spectrum signal generated by spread spectrum modulation achieved by multiplying a predetermined data code and a spread code, and obtains a transmission time on the basis of a peak in a cross-correlation between a spread code signal of sound collected by the electronic apparatus 32 as a reception signal and the spread code signal of the sound emitted as the transmission signal to acquire an absolute position and an absolute posture of the electronic apparatus 32.

However, each of the spread codes used for generation of the spread code signals emitted from the multiple sound output blocks 31 is not a complete orthogonal sequence in the above example. Accordingly, there is a case where the peak of the cross-correlation is difficult to appropriately identify for each of the sound output blocks 31.

For example, suppose a case where an electronic apparatus 402 collects transmission signals De1 and De2 emitted from sound output blocks 401-1 and 401-2 and obtains distances from the sound output blocks 401-1 and 401-2 as depicted in FIG. 22.

The transmission signals De1 and De2 herein are sound including spread code signals generated by spread spectrum modulation applied to a data code corresponding to a transmission target on the basis of spread codes Ex1 and Ex2, respectively.

In this case, as depicted in FIG. 23, the electronic apparatus 402 collects the transmission signal De1 emitted from the sound output block 401-1 as a reception signal De1' and also acquires cross-correlation power by despread modulation using the spread code Ex1 to obtain a distance to the sound output block 401-1 on the basis of a delay amount (time) of a peak RP1 of the cross-correlation power.

On the other hand, as depicted in FIG. 24, the electronic apparatus 402 collects the transmission signal De2 emitted from the sound output block 401-2 as a reception signal De2' and also acquires cross-correlation power by despread modulation using the spread code Ex2 to obtain a distance to the sound output block 401-2 on the basis of a delay amount (time) of a peak RP2 of the cross-correlation power.

Note that FIG. 23 depicts a case where the electronic apparatus 402 collects the transmission signal De1 including the sound emitted from the sound output block 401-1 as the reception signal De1' (upper left part in the figure), and obtains the cross-correlation power (lower right part in the figure) by despread modulation applied to the reception signal De1' by using the spread code Ex1 (upper right part in the figure) to measure the distance to the sound output block 401-1 on the basis of a delay amount (delay time) of the peak RP1 of the cross-correlation power.

Similarly, FIG. 24 depicts a case where the electronic apparatus 402 collects the transmission signal De2 including the sound emitted from the sound output block 401-2 as the reception signal De2' (upper left part in the figure), and obtains the cross-correlation power (lower right part in the figure) by despread modulation using the spread code Ex2 (upper right part in the figure) to measure the distance to the sound output block 401-2 on the basis of a delay amount (delay time) of the peak RP2 of the cross-correlation power.

However, the electronic apparatus 402 in an actual situation receives a mixture of the reception signals De1' and De2' as a result of emission of the transmission signals De1 and De2 in a mixed state. Accordingly, the electronic apparatus 402 applies despread modulation to the signals as a mixture of the reception signals De1' and De2' by using the spread codes Ex1 and Ex2.

In this case, as depicted in FIG. 25, a delay amount (time) of the true peak RP1 of the cross-correlation power is obtained by the despread modulation applied to the reception signal De1' by using the spread code Ex1, while a false peak FP1 of the cross-correlation power for the reception signal De1' is obtained by the despread modulation applied to the reception signal De1' by using the spread code Ex2.

The reception signal De1' herein is a signal corresponding to the transmission signal De1 obtained by the spread modulation using the spread code Ex1. Accordingly, no peak should be produced in the cross-correlation even by despread using the spread code Ex2, and therefore the produced peak FP1 is a false peak.

Similarly, as depicted in FIG. 26, a delay amount (time) of the peak RP2 of the cross-correlation power is obtained by the despread modulation applied to the reception signal De2' using the spread code Ex2, while a peak FP2 of the cross-correlation power is obtained by the despread modulation using the spread code Ex1.

In addition, the reception signal De2' is a signal corresponding to the transmission signal De2 obtained by the spread modulation using the spread code Ex2. Accordingly, no peak should be produced in the cross-correlation even by despread using the spread code Ex1.

In other words, the spread codes Ex1 and Ex2 do not have a relation completely orthogonal to each other. Accordingly, false peaks are produced in the cross-correlation power by despread modulation.

As a result of the despread modulation applied to each of the signals as a mixture of both the reception signals De1' and De2' by using the spread codes Ex1 and Ex2, the true peak RP1 and the false peak FP2, and the true peak RP2 and the false peak FP1 are obtained for the corresponding cross-correlation power as depicted in FIG. 27.

Concerning the cross-correlation power obtained by the despread modulation using the spread code Ex1 in the case of FIG. 27, the cross-correlation power at the peak RP1 is higher than that power at the peak FP2. In this case, the peak RP1 is determined as a true peak, and therefore the distance from the sound output block 401-1 is measured on the basis of the delay amount of the peak RP1.

In addition, concerning the cross-correlation power obtained by the despread modulation using the spread code Ex2 in the case of FIG. 27, the cross-correlation power at the peak RP2 is higher than that power at the peak FP1. In this case, the peak RP2 is determined as a true peak, and therefore the distance from the sound output block 401-2 is measured on the basis of the delay amount of the peak RP2.

Meanwhile, suppose a case where transmission signals De11 and De12 are emitted from the sound output blocks 401-1 and 401-2, respectively, in a state where a distance from the sound output block 401-2 is extremely shorter than a distance from the sound output block 401-1 as in a case of an electronic apparatus 402' depicted in FIG. 28, for example.

In a state of a positional relation depicted in FIG. 28, the transmission signals De11 and De12 emitted from the sound output blocks 401-1 and 401-2 are collected by the electronic apparatus 402' as reception signals De11' and De12', respectively.

In this example, the electronic apparatus 402' is located extremely closer to the sound output block 401-2 than to the sound output block 401-1. Accordingly, a reception level of the reception signal De12' is extremely higher than a reception level of the reception signal De11'. Note that the reception level of each of the reception signals De11' and De12' is expressed by a thickness in the figure.

At this time, the cross-correlation power at the true peak RP12 is sufficiently higher than the cross-correlation power at the false peak FP11 in a case of the cross-correlation power obtained by despread modulation using the spread code Ex2 in the mixed state of both the reception signals De11' and De12'. Accordingly, a distance to the sound output block 401-2 is appropriately measurable.

On the other hand, the cross-correlation power at the false peak FP12 is higher than the cross-correlation power at the true peak RP11 in the case of the cross-correlation power obtained by despread modulation using the spread code Ex1 in the mixed state of both the reception signals De11' and De12'. Accordingly, if whether a peak is true or false is determined on the basis of the magnitude of the cross-correlation power, the false peak FP12 is recognized as a true peak. In this case, an incorrect distance to the sound output block 401-1 is measured on the basis of this peak.

This problem is caused by the fact that the spread codes Ex1 and Ex2 are not completely orthogonal sequences to each other as described above, and by masking the transmission signal emitted from a far position by the transmission signal emitted from an extremely close position when a large difference is produced between reception signal levels.

Orthogonality of the spread code improves by increasing the length of the sequence. However, the time required for measurement increases as the sequence becomes longer. In this case, a processing speed decreases. Moreover, it is known that orthogonality of the spread code has a theoretical limit, and therefore complete orthogonality of the spread code is difficult to achieve.

Accordingly, the present disclosure multiplexes transmission signals emitted for each of the sound output blocks 401 while orthogonalizing the transmission signals to each other in a frequency band.

More specifically, as depicted in FIG. 29, for example, a reproduction speed of each of the sound output blocks 401-1 and 401-2 is reduced to compress the entire frequency band of each of the transmission signals De11 and De12.

FIG. 29 depicts a case of an example which reduces the frequency bands of the transmission signals De11 and De12 to half frequency bands as depicted in a right part of the figure by reducing the reproduction speeds at the frequency bands depicted in a left part of the figure to half reproduction speeds.

Thereafter, as depicted in FIG. 30, each of the frequency bands of the transmission signals De11 and De12 is divided by a predetermined frequency bandwidth and is arranged and multiplexed such that the respective transmission signals De11 and De12 are alternately distributed on a frequency axis.

A left part of FIG. 30 corresponds to the right part of FIG. 29. Frequency bands of the transmission signals De11 and De12 are depicted in an upper part and a lower part of FIG. 30, respectively. In addition, a right part of FIG. 30 depicts a state where a frequency band of each of the transmission signals De11 and De12 is divided by a predetermined frequency bandwidth as a division unit. The respective divisions are alternately arranged on the frequency axis for each predetermined frequency bandwidth without overlap, and are multiplexed.

Specifically, the frequency band of the transmission signal De11 is distributed to bands of h1 to h2, h3 to h4, h5 to h6, h7 to h8, h9 to h10, h11 to h12, h13 to h14, h15 to h16, and others.

Moreover, the frequency band of the transmission signal De12 is distributed to bands of h0 to h1, h2 to h3, h4 to h5, h6 to h7, h8 to h9, h10 to h11, h12 to h13, h14 to h15, and others.

In this manner, the frequency band of each of the transmission signals De11 and De12 is compressed, and is then divided and multiplexed so as to be orthogonal on the frequency axis, i.e., distributed without overlap. Accordingly, even when despread modulation is applied to the corresponding reception signals De11' and De12' by using the spread codes Ex1 and Ex2, a false peak produced in corresponding cross-correlation power can be reduced.

As a result, as described with reference to FIG. 28, only a true peak is detected even when a reception level difference between the reception signals increases in a state where the electronic apparatus 402' is located at a different distance from either one of the sound output blocks 401-1 and 401-2. Accordingly, a distance is appropriately detectable for each of the sound output blocks 401-1 and 401-2.

<Configuration example of home audio system of second embodiment>

FIG. 31 depicts a configuration example of a home audio system of the second embodiment to which the technology of the present disclosure is applied.

A home audio system 411 in FIG. 31 includes a display device 430, sound output blocks 431-1 to 431-4, and an electronic apparatus 432.

Note that configurations of the display device 430, the sound output blocks 431-1 to 431-4, the electronic apparatus 432, a sound input unit 451, and an IMU 452 of the home audio system 411 in FIG. 31 correspond to the configurations of the display device 30, the sound output blocks 31-1 to 31-4, the electronic apparatus 32, the sound input unit 51, and the IMU 52 of the home audio system 11 in FIG. 1, respectively, and have similar basic functions.

The home audio system 411 in FIG. 31 is different from the home audio system 1 in FIG. 1 in that the sound output blocks 431-1 to 431-4 are provided.

The sound output blocks 431-1 to 431-4 have basic functions identical to those of the sound output blocks 31-1 to 31-4. It is assumed, however, that each spread code signal obtained by applying spread spectrum using a spread code as a transmission signal to be emitted is multiplexed by compressing a frequency band into a quarter frequency band, dividing the compressed frequency band by a predetermined bandwidth, and arranging the divisions on a frequency axis without overlap as described above.

In this manner, the spread code signal transmitted as sound emitted from each of the sound output blocks 431-1 to 431-4 obtains orthogonality on the frequency axis. As a result, a false peak is not detected in the electronic apparatus 421 even by processing similar to the processing performed by the electronic apparatus 32 of the first embodiment. Accordingly, appropriate detection of a position and a posture is achievable.

<Configuration example of sound output block of second embodiment>

A configuration example of each of the sound output blocks 431 will be subsequently described with reference to FIG. 32.

Each of the sound output blocks 431 includes a spread code generation unit 471, a known musical composition sound source generation unit 472, and a sound output unit 474.

Note that configurations of the spread code generation unit 471, the known musical composition sound source generation unit 472, and the sound output unit 474 correspond to the configurations of the spread code generation unit 71, the known musical composition sound source generation unit 72, and the sound output unit 74 in FIG. 2, respectively, and have identical basic functions. Accordingly, description of these units will not be repeated.

Each of the sound output blocks 431 in FIG. 32 is different from each of the sound output blocks 31 in FIG. 2 in that a sound generation unit 473 is provided as a novel component instead of the sound generation unit 73.

The sound generation unit 473 includes a spread unit 481, a frequency shift processing unit 482, a sound field control unit 483, a band compression unit 484, and a division-multiplexing unit 485.

Note that the spread unit 481, the frequency shift processing unit 482, and the sound field control unit 483 have functions identical to those of the spread unit 81, the frequency shift processing unit 82, and the sound field control unit 83 of the sound generation unit 73 in FIG. 2. Accordingly, description of these units will not be repeated.

In other words, the sound generation unit 473 in FIG. 32 is different from the sound generation unit 473 in FIG. 2 in that the band compression unit 484 and the division-multiplexing unit 485 are provided as novel components.

As described with reference to FIG. 29, the band compression unit 484 compresses a frequency band of a transmission signal including a spread spectrum signal to which spread spectrum modulation has been applied by the spread unit 481 on the basis of a spread code. There are provided the four sound output blocks 431-1 to 41-4 in this example. Accordingly, the band compression unit 484 quarters a reproduction speed, for example, to compress the frequency band of the transmission signal to a quarter frequency band.

As described with reference to FIG. 30, the division-multiplexing unit 485 divides the compressed transmission signal by a predetermined frequency bandwidth, and arranges the divisions without overlap in the same frequency band for each of the four sound output blocks 431-1 to 431-4 to achieve division multiplexing.

Specifically, in the example of FIG. 32 where the four sound output blocks 431-1 to 431-4 are provided, the division-multiplexing unit 485 divides the transmission signal whose frequency band has been compressed to a quarter frequency band by a predetermined frequency bandwidth BH, and arranges the divisions without overlap between the four sound output blocks 431-1 to 431-4 on the frequency axis to achieve division multiplexing as depicted in FIG. 33, for example.

FIG. 33 illustrates an example where divisions of the transmission signal divided by the predetermined bandwidth BH are repeatedly arranged in a predetermined order in a first sequence to a fourth sequence from the upper side of the figure without overlap with each other.

Specifically, the division-multiplexing unit 485 of the sound output block 431-n (n: 1, 2, 3, 4) divides the corresponding transmission signal and arranges the divisions in the n-th sequence (n: 1, 2, 3, 4) depicted in FIG. 33 to achieve overall division multiplexing, for example.

In FIG. 33, the divisions of the transmission signal divided by the predetermined bandwidth BH are arranged at frequencies of h0 to h1, h4 to h5, h8 to h9, h12 to h13, and others in the first sequence, h1 to h2, h5 to h6, h9 to h10, h13 to h14, and others in the second sequence, h2 to h3, h6 to h7, h10 to h11, h14 to h15, and others in the third sequence, and h3 to h4, h7 to h8, h11 to h12, h15 to h16, and others in the fourth sequence.

By arranging the transmission signals each divided by the predetermined bandwidth BH in different sequences without overlap between the sound output blocks 431-1 to 431-4 on the frequency axis, the transmission signals emitted respectively from the sound output blocks 431-1 to 431-4 are multiplexed while being orthogonalized to each other on the frequency axis.

<Sound emission process by sound output block in FIG. 32>

A sound emission (output) process performed by each of the sound output blocks 431 in FIG. 32 will be subsequently described with reference to a flowchart in FIG. 34.

In step S101, the spread code generation unit 471 generates a spread code and outputs the generated spread code to the sound generation unit 73.

In step S102, the known musical composition sound source generation unit 472 generates a known musical composition sound source stored therein and outputs the generated musical composition sound source to the sound generation unit 473.

In step S103, the sound generation unit 473 causes the spread unit 481 to achieve spread spectrum modulation by multiplying a predetermined data code by the spread code to generate a spread code signal.

In step S104, the sound generation unit 473 causes the band compression unit 484 to compress a frequency band of the spread code signal obtained by spread modulation to a quarter frequency band.

In step S105, the sound generation unit 473 causes the division-multiplexing unit 485 to divide the spread code signal obtained by spread modulation and frequency band compression to a quarter frequency band by a predetermined frequency bandwidth, and to arrange the divisions in the n-th sequence.

In step S106, the sound generation unit 473 causes the frequency shift processing unit 482 to shift the frequency of the spread code signal.

In step S107, the sound generation unit 73 outputs the known musical composition sound source and the spread code signal after the frequency shift to the sound output unit 474 including a speaker, and causes the sound output unit 474 to emit (output) these sound source and signal as sound.

By the foregoing processes executed by each of the sound output blocks 431-1 to 431-4, sound corresponding to the known musical composition sound source is allowed to be emitted to and heard and viewed by a user carrying the electronic apparatus 432.

Moreover, the spread code signal is allowed to be shifted to a frequency band unperceivable by a human corresponding to the user, and to be output as sound. Accordingly, the electronic apparatus 432 is capable of measuring each distance to the sound output blocks 431 on the basis of the sound including the emitted spread code signal and shifted to the frequency band unperceivable by humans while preventing the user from hearing uncomfortable sound.

Furthermore, in this case, the frequency band of the transmission signal including the emitted spread code signal is divided by the predetermined bandwidth, and the divisions are arranged in the n-th sequence without overlap between the respective sound output blocks 431-n (n: 1, 2, 3, 4). In this case, the transmission signals emitted from the sound output blocks 431-1 to 431-4 become signals orthogonal to each other on the frequency axis.

Accordingly, in a case of the electronic apparatus 432, only a true peak in cross-correlation power is detected only by executing the sound collection process described above even when the despread process using the corresponding spread code is performed in a state of mixture of the transmission signals emitted from the respective sound output blocks 431-1 to 431-4. In this case, erroneous detection based on a false peak is reduced as described with reference to FIG. 28. As a result, appropriate measurement of distances to the sound output blocks 431-1 to 431-4 is achievable.

<<7. First modification of second embodiment>>

Described above has been the example where the division-multiplexing unit 485 arranges the transmission signal divided by the predetermined frequency bandwidth BH within the frequency band ranging from the frequency h0 as a minimum frequency for each of the sound output blocks 431-1 to 431-4 as depicted in FIG. 33.

However, the frequency bands of the transmission signals are only required to become orthogonal to each other, and therefore arrangement of the frequency band of each transmission signal need not start from the minimum band, but may be defined in a predetermined band. For example, as depicted in FIG. 35, the transmission signal may be arranged in a range (band) equal to or higher than the frequency h4.

In FIG. 35, the divisions of the transmission signal divided by the predetermined frequency bandwidth BH are arranged in a frequency band of h4 to h5, h8 to h9, h12 to h13, and others in the first sequence, h5 to h6, h9 to h10, h13 to h14, and others in the second sequence, h6 to h7, h10 to h11, h14 to h15, and others in the third sequence, and h7 to h8, h11 to h12, h15 to h16, and others in the fourth sequence.

Moreover, the transmission signal divided by the predetermined bandwidth may be repeatedly arranged in a predetermined order in the first sequence to the fourth sequence without overlap within a predetermined band range defined by limiting a minimum frequency and a maximum frequency.

<<8. Second modification of second embodiment>>

Described above has been the example where the transmission signals each obtained by compressing the bandwidth and dividing the band by the predetermined frequency bandwidth BH are arranged in the first sequence to the fourth sequence to allow the transmission signals emitted from the sound output blocks 431-1 to 431-4 to obtain orthogonality to each other in the frequency band.

However, the predetermined frequency bandwidth BH is not limited to a predetermined value, but may be set to any value, such as a bandwidth BH1 and a bandwidth BH2, as depicted in an upper part and a lower part of FIG. 36, for example.

Note herein that there is a characteristic that the predetermined bandwidth BH dividing the transmission signal and having a large length is more resistant to movement of the electronic apparatus 432.

On the other hand, the predetermined bandwidth BH dividing the transmission signal and having a small length is more resistant to disturbance at a specific frequency, and is not easily affected by a frequency characteristic of a speaker.

On the basis of such characteristics, for example, the predetermined frequency bandwidth BH may be increased in a case where the electronic apparatus 432 frequently moves, or may be reduced in an environment where disturbance is caused at a specific frequency or where the speaker characteristic changes.

<<9. Application example of second embodiment>>

Described above has been the example which divides the transmission signals emitted from the sound output blocks 431-1 to 431-4 by the predetermined frequency bandwidth for each after overall bandwidth compression, and arranges the transmission signals in the first sequence to the fourth sequence without overlap to allow the transmission signals emitted from the sound output blocks 431-1 to 431-4 to obtain orthogonality to each other on the frequency axis.

However, when the user wearing any of the sound output blocks 431-1 to 431-4 or the electronic apparatus 432 moves, a false peak may be produced by overlap of a part of the frequency bands as a result of a Doppler frequency shift caused by the movement of the user.

More specifically, when a Doppler frequency shift indicated by solid arrows is caused according to movement in a sequence in a lower part of the figure with respect to a sequence in an upper part of the figure as depicted in FIG.

37, for example, overlap between bands is produced as indicated by one-dot chain lines and sandwiched between dotted arrows in a middle part of the figure.

In such a case, an overlap ratio between bands increases when the divided predetermined frequency bandwidth BH is short. As a result, false peak power increases. Accordingly, when the predetermined frequency bandwidth BH is made longer, the false peak power can be reduced as described with reference to FIG. 36.

However, a frequency band shift is not caused without movement as described with reference to FIG. 36. In this case, the relatively short predetermined bandwidth BH is more resistant to disturbance at a specific frequency, and is not easily affected by a frequency characteristic of a speaker.

Accordingly, the predetermined frequency bandwidth BH may be varied according to a speed required for the electronic apparatus 432 carried by the user.

For example, assuming that the predetermined bandwidth BH is a predetermined bandwidth BH11 in a case where the moving speed of the electronic apparatus 432 is a speed V1 which is substantially zero as indicated in a left part of FIG. 38, the predetermined bandwidth BH is set to a predetermined bandwidth BH12 (> BH11) which is longer than the predetermined bandwidth BH11 at the time of a speed V2 which is higher than the speed V1, such as a speed of the user during walking, as indicated in a central part of FIG. 38.

Furthermore, in a case where the moving speed of the electronic apparatus 432 is a speed V3 which is higher than the speed V2 during walking, such as a speed during running, the predetermined bandwidth BH is set to a predetermined bandwidth BH13 (> BH12) which is longer than the predetermined bandwidth BH12 as indicated in a right part of FIG. 38.

A Doppler frequency shift amount is calculated by "speed/sound speed $\times$ frequency." Accordingly, assuming that a general walking speed is 1 m/s at room temperature and that a transmission signal uses a frequency band near 16 kHz, for example, a shift amount of a Doppler frequency shift caused while the user wearing the electronic apparatus 432 is walking is 47 Hz (= 1/340 $\times$ 16 kHz).

When each proportion of the ranges of the bandwidths each sandwiched by the one-dot chain lines in FIG. 37 and overlapping with another sequence in the shift amount of the Doppler frequency shift described above is desired to be made smaller than 10% of the predetermined bandwidth BH, the predetermined bandwidth BH is set to approximately 500 Hz ($\approx$47H $\times$ 10) to achieve this proportion.

On the basis of this setting, therefore, it is preferable that the predetermined bandwidth BH is shorter than 500 Hz while the user wearing the electronic apparatus 432 is stopping. Accordingly, the predetermined bandwidth BH may be set to 4 Hz, for example.

Moreover, in a similar manner, it is preferable that the predetermined bandwidth BH is longer than 500 Hz while the user wearing the electronic apparatus 432 is running. Accordingly, the predetermined bandwidth BH may be set to 2 kHz, for example.

As obvious from above, not only resistance to disturbance of a specific frequency and reduction of effect of a frequency characteristic of a speaker increase, but also reduction of effect of a shift of a frequency band caused by movement is achievable by dividing the transmission signals by the predetermined frequency bandwidth corresponding to the moving speed of the electronic apparatus 432 for each, and arranging the transmission signals so as to be orthogonal to each other.

<Configuration example of home audio system of application example of second embodiment>

FIG. 39 depicts a configuration example of a home audio system according to an application example of the second embodiment to which the technology of the present disclosure is applied.

A configuration included in a home audio system 411' in FIG. 39 and having a function identical to the corresponding function of the audio system 411 in FIG. 31 is given an identical reference number, and is not repeatedly described.

The home audio system 411' in FIG. 39 is different from the home audio system 411 in FIG. 31 in that sound output blocks 431'-1 to 431'-4 and an electronic apparatus 432' are provided instead of the sound output blocks 431-1 to 431-4 and the electronic apparatus 432, respectively.

The sound output blocks 431'-1 to 431'-4 are identical to the sound output blocks 431-1 to 431-4 in a point of a basic function, but are different in a point that each of the sound output blocks 431'-1 to 431'-4 changes a predetermined frequency bandwidth for division at the time of compression, division, and multiplexing of a frequency band of a transmission signal on the basis of a parameter transmitted from the electronic apparatus 432' and set according to a speed of the electronic apparatus 432'.

Moreover, the electronic apparatus 432' is identical to the electronic apparatus 432 in a point of a basic function, but is different in a point that a parameter for setting the predetermined frequency bandwidth as a division reference at the time of compression and division of the frequency band of the transmission signal is determined further according to the own speed and that information indicating the determined parameter is transmitted to each of the sound output blocks 431'-1 to 431'-4.

More specifically, the electronic apparatus 432' includes a sound input block 441' instead of the sound input block 441.

The sound input block 441' is identical to the sound input block 441 in a point of a basic function, but is different in a point that a parameter for setting a predetermined frequency bandwidth as a division reference at the time of compression and division of the frequency band of the transmission signal is determined for each of the sound output blocks 431'-1 to 431'-4 on the basis of a speed calculated in a step of obtaining a position and a posture of the electronic apparatus 432', and that the determined parameter is transmitted to each of the sound output blocks 431'-1 to 431'-4.

Specifically, according to the home audio system 411' in FIG. 39, the electronic apparatus 432' determines the parameter for setting the predetermined frequency bandwidth as a reference of division at the time of compression and division of the frequency band of the transmission signal is determined for each of the sound output blocks 431'-1 to 431'-4, and transmits information indicating the determined parameter to each of the sound output blocks 431'-1 to 431'-4 by near field communication such as Bluetooth (registered trademark).

The sound output blocks 431'-1 to 431'-4 each acquire information indicating the parameter set according to a speed V of the electronic apparatus 432', and divide the frequency band of the transmission signal by the predetermined frequency bandwidth set on the basis of the acquired parameter as a division reference, and then arrange the transmission signals without overlap, i.e., so as to be orthogonal to each other on the frequency axis at the time of compression, division, and multiplexing of the frequency band of the transmission signal.

In this manner, the transmission signals emitted from the sound output blocks 431'-1 to 431'-4 become orthogonal to each other. Accordingly, a true peak is detectable in cross-correlation power with a spread code according to each distance.

As a result, disturbance at a particular frequency, an effect of a frequency characteristic of a speaker, and an effect on a shift of the frequency band at the time of movement of the user wearing the electronic apparatus 432' can be reduced. Accordingly, a position and a posture of the electronic apparatus 432' can be appropriately obtained.

<Configuration example of sound output block of application example of second embodiment>

A configuration example of the sound output blocks 431' according to an application example of the second embodiment will be subsequently described with reference to FIG. 40.

A configuration included in the sound output blocks 431' in FIG. 40 and having a function identical to the corresponding function of the sound output blocks 431 in FIG. 32 is given an identical reference number, and is not repeatedly described.

Specifically, each of the sound output blocks 431' in FIG. 40 is different from each of the sound output blocks 431 in FIG. 32 in that a sound generation unit 473' is provided instead of the sound generation unit 473 and that a reception unit 491 is added.

The reception unit 491 receives information transmitted from the electronic apparatus 432' via near field communication such as Bluetooth (registered trademark) and indicating a parameter set on the basis of an absolute speed of movement of the electronic apparatus 432', and outputs the received information to the sound generation unit 473'.

The sound generation unit 473' in FIG. 40 is different from the sound generation unit 473 in FIG. 32 in that a division-multiplexing unit 485' is provided instead of the division-multiplexing unit 485.

The division-multiplexing unit 485' has a basic function similar to that of the division-multiplexing unit 485, and is further configured to acquire the information supplied from the reception unit 491 and indicating the parameter set on the basis of the absolute speed of the electronic apparatus 432', and also divide a transmission signal having a compressed frequency band by a predetermined frequency bandwidth corresponding to the parameter and arrange the transmission signal so as to be orthogonal to transmission signals of the other sound output blocks 431'.

<Configuration example of electronic apparatus of application example of second embodiment>

A configuration example of the electronic apparatus 432' according to an application example of the second embodiment will be subsequently described with reference to FIG. 41.

The electronic apparatus 432' in FIG. 41 includes the sound input block 441', a control unit 541, an output unit 542, and a transmission unit 543.

Note that the control unit 541 and the output unit 542 have functions similar to those of the control unit 42 and the output unit 43 in FIG. 3. Accordingly, description of these units will not be repeated.

The sound input block 441' has a basic function similar to that of the sound input block 41, and includes the sound input unit 451, the IMU (Inertial Measurement Unit) 452, a parameter determination unit 453, a known musical composition sound source removal unit 591, a space transmission characteristic calculation unit 592, a transmission time calculation unit 593, a Doppler frequency shift calculation unit 594, and a position-posture calculation unit 595.

Note that the sound input unit 451, the IMU (Inertial Measurement Unit) 452, the known musical composition sound source removal unit 591, the space transmission characteristic calculation unit 592, the transmission time calculation unit 593, and the Doppler frequency shift calculation unit 594 are similar to the sound input unit 51, the IMU (Inertial Measurement Unit) 52, the known musical composition sound source removal unit 91, the space transmission characteristic calculation unit 92, the transmission time calculation unit 93, and the Doppler frequency shift calculation unit 94 in FIG. 3, respectively, and therefore will not be repeatedly described.

The position-posture calculation unit 595 is similar to the position-posture calculation unit 95 in a point of a basic function, but is configured to further output an absolute speed calculated in a step of obtaining an absolute position and an absolute posture of the electronic apparatus 432' to the parameter determination unit 453.

On the basis of the absolute speed calculated in the step of obtaining the absolute position and the absolute posture of the electronic apparatus 432', the parameter determination unit 453 determines a parameter for setting a predetermined frequency bandwidth as a division reference at the time of compression and division of the frequency band of the transmission signal for multiplexing for each of the sound output blocks 431'-1 to 431'-4, and outputs the determined parameter to the transmission unit 543.

The transmission unit 543 transmits the parameter determined according to the absolute speed of the electronic apparatus 432' to each of the sound output blocks 431'-1 to 431'-4 via near field communication, such as Bluetooth (registered trademark) as a typical example.

<Configuration example of position-posture calculation unit of application example of second embodiment>

A configuration example of the position-posture calculation unit 595 will be subsequently described with reference to FIG. 42.

The position-posture calculation unit 595 includes an absolute position calculation unit 611, a Doppler speed calculation unit 612, and an absolute posture calculation unit 613. Note that the absolute position calculation unit 611 and the absolute posture calculation unit 613 have functions identical to those of the absolute position calculation unit 111 and the absolute posture calculation unit 113 in FIG. 4. Accordingly, description of these units will not be repeated.

The Doppler speed calculation unit 612 has a function similar to that of the Doppler speed calculation unit 112, but is configured to calculate a moving speed (Doppler speed) of the electronic apparatus 432' as an absolute speed (VX, VY, VZ), and outputs the calculated absolute speed to the parameter determination unit 453 in addition to the absolute posture calculation unit 613.

By such a configuration, the parameter for setting the predetermined bandwidth as the division reference at the time of compression and division of the frequency band of the transmission signal for multiplexing is determined for each of the sound output blocks 431'-1 to 431'-4 on the basis of the absolute speed (VX, VY, VZ) as the moving speed of the electronic apparatus 432', and the determined parameter is transmitted to each of the sound output blocks 431'-1 to 431'-4.

<Sound collection process by electronic apparatus in FIG. 41>

A sound collection process performed by the electronic apparatus 432' in FIG. 41 will be subsequently described with reference to a flowchart in FIG. 43.

Note that steps S131 to S138 and S145 in the flowchart in FIG. 43 are similar to steps S31 to S39 in the flowchart in FIG. 15, and therefore will not be repeatedly described.

Specifically, processing from steps S131 to S138 collects sound, removes a component of a known musical composition sound source from the collected sound, calculates a transmission time, obtains a frequency shift amount of a spread code signal of the collected sound, detects angular velocity and acceleration of the electronic apparatus 432', and calculates a ground posture (Roll and Pitch), an absolute position, and an absolute posture. After completion of these steps, the process proceeds to step S139.

At this time, the Doppler speed calculation unit 612 in step S138 of the position-posture calculation process calculates a moving speed of the electronic apparatus 432' as an absolute speed (VX, VY, VZ), and outputs the calculated absolute speed to the parameter determination unit 453 in addition to the absolute posture calculation unit 613.

Note that a cross-correlation p may be obtained while changing a moving speed in a predetermined range (e.g., -1.00 to 1.00 m/s) with a predetermined step (e.g., 0.01 m/s step), and a speed indicating a maximum peak of the cross-correlation p may be obtained as the moving speed of the electronic apparatus 32 (the sound input unit 51 of the electronic apparatus 32). Alternatively, the moving speed may be obtained on the basis of a difference between an absolute position obtained in the processing immediately before and a current absolute position.

In step S139, the parameter determination unit 453 determines whether or not the absolute speed is lower than a first predetermined value in a state where the user wearing the electronic apparatus 432' is substantially stationary.

In a case of determination that the absolute speed is lower than the first predetermined value in a state where the user wearing the electronic apparatus 432' is substantially stationary in step S139, the process proceeds to step S140.

In step S140, the parameter determination unit 453 designates a parameter corresponding to the frequency bandwidth BH11 as a parameter for setting a frequency bandwidth as a reference for dividing a frequency band as indicated in the left part of FIG. 38, for example, and outputs the designated parameter to the transmission unit 543.

On the other hand, in a case of determination that the absolute speed is higher than the first predetermined value in a state where the user wearing the electronic apparatus 432' is not substantially stationary but walking or running in step S139, the process proceeds to step S141.

In step S141, the parameter determination unit 453 determines whether or not the absolute speed is lower than a second predetermined value higher than the first predetermined value in a state where the user wearing the electronic apparatus 432' is walking.

In a case of determination that the absolute speed is lower than the second predetermined value in a state where the user wearing the electronic apparatus 432' is walking in step S141, the process proceeds to step S142.

In step S142, the parameter determination unit 453 designates a parameter corresponding to the frequency bandwidth BH12 as the parameter for setting the frequency bandwidth as the reference for dividing the frequency band as indicated in the central part of FIG. 38, for example, and outputs the designated parameter to the transmission unit 543.

Thereafter, in a case of determination that the absolute speed is higher than the second predetermined value in a state where the user wearing the electronic apparatus 432' is running in step S141, the process proceeds to step S143.

In step S143, the parameter determination unit 453 designates a parameter corresponding to the frequency bandwidth BH13 as the parameter for setting the frequency bandwidth as the reference for dividing the frequency band as indicated in the right part of FIG. 38, for example, and outputs the designated parameter to the transmission unit 543.

In step S144, the transmission unit 543 transmits the parameter determined according to the absolute speed of the electronic apparatus 432' to each of the sound output blocks 431'-1 to 431'-4 via near field communication.

In step S145, the control unit 541 executes processing based on the absolute position and the absolute posture of the electronic apparatus 432' thus obtained to end the process.

By the foregoing process, the absolute position and the absolute posture of the electronic apparatus 432' are obtained from the sound signal including the spread code signal and emitted from each of the sound output blocks 431'-1 to 431'-4, and the parameter for setting the predetermined frequency bandwidth as the division reference at the time of compression and division of a frequency band of the transmission signal for multiplexing for each of the sound output blocks 431'-1 to 431'-4 is determined on the basis of the absolute speed obtained in the step of obtaining the absolute position and posture of the electronic apparatus 432', and is transmitted to each of the sound output blocks 431'-1 to 431'-4.

<Sound emission process by sound output block in FIG. 40>

A sound emission (output) process performed by each of the sound output blocks 431' in FIG. 40 will be subsequently described with reference to a flowchart in FIG. 44.

Note that steps S151 to S154, S157, and S158 in the flowchart in FIG. 44 are identical to steps S101 to S104, S106, and S107 in the flowchart in FIG. 34, and therefore will not be repeatedly described.

Specifically, processing in steps S151 to S154 generates a spread code, generates a spread code signal by spread spectrum modulation achieved by multiplying a predetermined data code by the spread code, and compresses a frequency band of the spread code signal obtained by spread modulation to a quarter frequency band. Thereafter, the process proceeds to step S155.

In step S155, the reception unit 491 receives a parameter transmitted from the electronic apparatus 432' and set on the basis of an absolute speed of the electronic apparatus 432', and supplies the received parameter to the division-multiplexing unit 485' of the sound generation unit 473'.

In step S156, the sound generation unit 473' causes the division-multiplexing unit 485' to divide the frequency band of the sound signal including the spread code signal, which has been spread-modulated and compressed to a quarter frequency band, by a frequency bandwidth corresponding to the acquired parameter, and to arrange the spread code signal in the n-th sequence so as to be orthogonal on the frequency axis.

In step S157, the sound generation unit 473' causes the frequency shift processing unit 482 to shift the frequency of the spread code signal.

In step S158, the sound generation unit 473' outputs a known musical composition sound source and the spread code signal subjected to the frequency shift to the sound output unit 474 including a speaker, and causes the sound output unit 474 to emit (output) these sound source and signal as sound.

By the foregoing processes executed by each of the sound output blocks 431'-1 to 431'-4, the sound signals each including the spread code signal are divided by the frequency bandwidth corresponding to the moving speed of the electronic apparatus 432', and are multiplexed so as to be orthogonal to each other on the frequency axis.

In this manner, even when the despread process using the corresponding spread code is performed in a state of mixture of the transmission signals emitted from the respective sound output blocks 431'-1 to 431'-4, the sound signals each including the spread code signal are divided in a frequency direction by the frequency bandwidth corresponding to the moving speed of the electronic apparatus 432', and are multiplexed so as to be orthogonal to each other, reducing a false peak to be produced.

As a result, improvement of resistance to disturbance at a specific frequency and reduction of an effect of a frequency characteristic of a speaker, and also reduction of an effect on a frequency band shift at the time of movement are achievable according to the moving speed of the electronic apparatus 432'. Accordingly, distances to the sound output blocks 431'-1 to 431'-4 are appropriately measurable.

<<10. Example executed by software>>

Meanwhile, a series of processes described above may be executed either by hardware or by software. In a case where a series of processes are executed by software, a program constituting the software is installed in a computer incorporated in dedicated hardware, a computer capable of executing various functions under various programs installed in the computer, such as a general-purpose computer, or other types of computers from a recording medium.

FIG. 45 depicts a configuration example of a general-purpose computer. This computer has a CPU (Central Processing Unit) 1001 as a built-in component. An input/output interface 1005 is connected to the CPU 1001 via a bus 1004. A ROM (Read Only Memory) 1002 and a RAM (Random Access Memory) 1003 are connected to the bus 1004.

Connected to the input/output interface 1005 are an input unit 1006 including an input device through which the user inputs an operation command, such as a keyboard and a mouse, an output unit 1007 which outputs a processing operation screen and a processing result image to a display device, a storage unit 1008 including a component for storing programs and various types of data, such as a hard disk drive, and a communication unit 1009 which includes a LAN (Local Area Network) adapter or the like and executes a communication process via a network such as the Internet as a typical example. Further connected is a drive 1010 which reads and writes data from and to a removable storage medium 1011, such as a magnetic disk (including a flexible disk), an optical disk (including CD-ROM (including Compact Disc-Read Only Memory), DVD (Digital Versatile Disk)), a magneto-optical disk (including MD (Mini Disc)), and a semiconductor memory.

The CPU 1001 executes various processes according to a program stored in the ROM 1002, or a program read from the removable storage medium 1011, such as a magnetic disk, an optical disk, a magneto-optical disk, and a semiconductor memory, installed in the storage unit 1008, and loaded from the storage unit 1008 to the RAM 1003. Data and the like necessary for the CPU 1001 to execute the various processes are further stored in the RAM 1003 as necessary.

According to the computer configured as described above, for example, the CPU 1001 loads a program stored in the storage unit 1008 into the RAM 1003 via the input/output interface 1005 and the bus 1004, and executes the loaded program to perform the series of processes described above.

For example, the program executed by the computer (CPU 1001) can be recorded in the removable storage medium 1011 as a package medium or the like and can be provided in this form. Moreover, the program can be provided via a wired or wireless transfer medium such as a local area network, the Internet, and digital satellite broadcasting.

The program of the computer can be installed in the storage unit 1008 via the input/output interface 1005 from the removable storage medium 1011 attached to the drive 1010. Alternatively, the program can be received by the communication unit 1009 via a wired or wireless transfer medium, and can be installed in the storage unit 1008. Instead, the program can be installed in the ROM 1002 or the storage unit 1008 beforehand.

Note that the program executed by the computer may be a program where processes are performed in time series in the order explained in the present description, or a program where processes are performed in parallel or at necessary timing such as an occasion of a call.

Note that the CPU 1001 in FIG. 45 achieves the functions of the sound output blocks 31 and the sound input block 41 in FIG. 1, the sound output blocks 431 and the sound input block 441 in FIG. 31, and the sound output blocks 431' and the sound input block 441' in FIG. 39.

In addition, the system in the present description refers to a set of multiple constituent elements (e.g., devices, modules (parts)), and does not require all constituent elements to be accommodated within an identical housing. Accordingly, both multiple devices accommodated in separate housings and connected via a network and one device which has multiple modules accommodated in one housing are defined as systems.

Note that embodiments of the present disclosure are not limited to the embodiments described above, but can be modified in various manners within a range not departing from the subject matters of the present disclosure.

For example, the present disclosure can have a configuration of cloud computing where multiple devices share and perform one function in cooperation with each other via a network.

Moreover, the respective steps described above with reference to the flowcharts can be executed by one device, or can be shared and executed by multiple devices.

Furthermore, in a case where one step contains multiple processes, the multiple processes contained in the one step can be executed by one device, or can be shared and executed by multiple devices.

Note that the present disclosure can also have the following configurations.

<1> An information processing device including:

a sound reception unit that receives a sound signal output from each of multiple sound output blocks present at known positions, the sound signal including a spread code signal based on a spread code to which spread spectrum modulation has been applied;

an IMU (Inertial Measurement Unit) that detects angular velocity and acceleration; and

a position-posture calculation unit that calculates an own absolute position and an own absolute posture on the basis of the sound signal received by the sound reception unit, the angular velocity, and the acceleration.

<2> The information processing device according to <1>, further including:

a ground posture detection unit that detects the own ground posture on the basis of the angular velocity and the acceleration, in which

the position-posture calculation unit includes a transmission time calculation unit that calculates a transmission time of the sound signal,

the position-posture calculation unit calculates the own absolute position on the basis of the transmission time and a known position of each of the multiple sound output blocks,

the position-posture calculation unit includes an absolute speed calculation unit that calculates the own absolute speed on the basis of the sound signal, and

the position-posture calculation unit calculates the absolute posture on the basis of the own absolute speed and the ground posture.

<3> The information processing device according to <2>, in which
the transmission time calculation unit includes

a cross-correlation calculation unit that calculates each cross-correlation between the spread code signal included in the sound signal received by the sound reception unit and the spread code signals of the sound signals output from the multiple sound output blocks, and

a peak detection unit that detects a time corresponding to a peak in the cross-correlation as the transmission time, and

the transmission time calculation unit calculates the own absolute position on the basis of the transmission time detected by the peak detection unit and the known position of each of the multiple sound output blocks.

<4> The information processing device according to <3>, in which the transmission time calculation unit calculates the own absolute position by calculating simultaneous equations that are equations based on the transmission time detected by the peak detection unit and the known position of each of the multiple sound output blocks and that designate a coordinate of the own absolute position as an unknown.

<5> The information processing device according to <4>, in which the transmission time calculation unit calculates the own absolute position by calculating simultaneous equations that are equations based on the transmission time detected by the peak detection unit and the known position of each of the multiple sound output blocks and that designate, in addition to the coordinate of the own absolute position, a distance offset corresponding to a system delay, as unknowns.

<6> The information processing device according to <2>, in which the absolute speed calculation unit calculates the own absolute speed on the basis of a Doppler frequency shift amount of the sound signal received by the sound reception unit.

<7> The information processing device according to <2>, in which the position-posture calculation unit calculates the absolute posture in such a manner that a posture change based on the absolute speed corresponds to a posture change based on the ground posture.

<8> The information processing device according to <1>, further including:

a ground posture detection unit that detects an own ground posture on the basis of the angular velocity and the acceleration; and

a cross-correlation calculation unit that calculates each cross-correlation between the spread code signal included in the sound signal received by the sound reception unit and the spread code signals of the sound signals output from the multiple sound output blocks, in which

the position-posture calculation unit calculates the absolute posture on the basis of an absolute speed that is an own speed at a time of a maximum peak of the cross-correlation and the ground posture.

<9> The information processing device according to <1>, in which the sound signal that is output from each of the multiple sound output blocks present at the known positions and includes the spread code signal based on the spread code to which spread spectrum modulation has been applied is processed so as to become a sound signal that is not easily perceivable for a human sense of hearing.
<10> The information processing device according to <9>, in which

the sound signal that is output from each of the multiple sound output blocks present at the known positions and includes the spread code signal based on the spread code to which spread spectrum modulation has been applied is up-sampled, and processed so as to become a sound signal that is not easily perceivable for the human sense of hearing, by shift-processing for imposing limitation to a predetermined frequency band that is not easily perceivable for the human sense of hearing, and
the information processing device further includes a reverse shift processing unit that performs a reverse shift process of the shift process for the sound signal received by the sound reception unit and including the spread code signal.

<11> The information processing device according to <9>, in which the sound signal that is output from each of the multiple sound output blocks present at the known positions and includes the spread code signal based on the spread code to which spread spectrum modulation has been applied is subjected to auditory compression so as to become a sound signal that is not easily perceivable for the human sense of hearing.
<12> The information processing device according to <1>, in which

the sound signal that is output from each of the multiple sound output blocks present at the known positions and includes the spread code signal based on the spread code to which spread spectrum modulation has been applied is received together with sound including a known musical composition sound source,
the information processing device further includes a known musical composition sound source removal unit that removes the known musical composition sound source from the sound received by the sound reception unit, and
the position-posture calculation unit calculates the own absolute position and the own absolute posture on the basis of the sound signal from which the known musical composition sound source has been removed by the known musical composition sound source removal unit.

<13> The information processing device according to <1>, further including:
a control unit that controls an operation on the basis of the own absolute position and the own absolute posture calculated by the position-posture calculation unit.
<14> The information processing device according to <13>, in which the control unit causes each of the multiple sound output blocks to output sound that forms a sound field corresponding to the own absolute position and the own absolute posture calculated by the position-posture calculation unit.
<15> The information processing device according to <13>, further including:

a display unit that constitutes an HMD (Head Mounted Display), in which
the control unit controls display of the display unit to display an image corresponding to the own absolute position and the own absolute posture calculated by the position-posture calculation unit.

<16> The information processing device according to <15>, in which the display unit is a see-through display unit.
<17> The information processing device according to any one of <1> to <16>, in which the sound signals that are output from the multiple sound output blocks present at the known positions and each include the spread code signal based on the spread code to which spread spectrum modulation has been applied are orthogonal to each other on a frequency axis.
<18> The information processing device according to <17>, in which the sound signals that are output from the multiple sound output blocks present at the known positions and each include the spread code signal are signals in different frequency bands on the frequency axis.
<19> The information processing device according to <18>, in which the sound signals that are output from the multiple sound output blocks present at the known positions and each include the spread code signal are signals each divided by a predetermined frequency bandwidth and arranged on the frequency axis in a predetermined order without overlap of the frequency bands.

<20> The information processing device according to <19>, in which the sound signals that are output from the multiple sound output blocks present at the known positions and each include the spread code signal are signals whose each frequency bandwidth is compressed to a rate of a reciprocal of a number of the multiple sound output blocks, is each divided by the predetermined frequency bandwidth, and is arranged on the frequency axis in the predetermined order without overlap of the frequency bands.

<21> The information processing device according to <19>, in which the predetermined frequency bandwidth is set according to an own speed.

<22> The information processing device according to <21>, in which the predetermined frequency bandwidth is set to a longer bandwidth as the own speed increases.

<23> The information processing device according to <21>, further including:

an absolute speed calculation unit that calculates the own absolute speed on the basis of the sound signal;
a parameter determination unit that determines a parameter for setting the predetermined frequency bandwidth on the basis of the absolute speed; and
a transmission unit that transmits the parameter to each of the multiple sound output blocks, in which
each of the multiple sound output blocks divides a frequency band of the sound signal including the spread code signal by the predetermined frequency bandwidth based on the parameter transmitted from the transmission unit, and arranges the sound signal so as to be orthogonal to the sound signal emitted from each of the other sound output blocks and including the spread code signal, on the frequency axis.

<24> An information processing method including:

a step of receiving a sound signal output from each of multiple sound output blocks present at known positions, the sound signal including a spread code signal based on a spread code to which spread spectrum modulation has been applied;
a step of detecting angular velocity and acceleration; and
a step of calculating an own absolute position and an own absolute posture on the basis of the received sound signal, the angular velocity, and the acceleration.

<25> A program that causes a computer to function as:

a sound reception unit that receives a sound signal output from each of multiple sound output blocks present at known positions, the sound signal including a spread code signal based on a spread code to which spread spectrum modulation has been applied;
an IMU (Inertial Measurement Unit) that detects angular velocity and acceleration; and
a position-posture calculation unit that calculates an own absolute position and an own absolute posture on the basis of the sound signal received by the sound reception unit, the angular velocity, and the acceleration.

[Reference Signs List]

11: Home audio system
31, 31-1 to 31-4: Sound output block
32: Electronic apparatus
41: Sound input block
42: Control unit
43: Output unit
51, 51-1, 51-2: Sound input unit
52: IMU
71: Spread code generation unit
72: Known musical composition sound source generation unit
73: Sound generation unit
74: Sound output unit
81: Spread unit
82: Frequency shift processing unit
83: Sound field control unit
91: Known musical composition sound source removal unit

92: Space transmission characteristic calculation unit

93: Transmission time calculation unit

94: Doppler frequency shift calculation unit

95: Position-posture calculation unit

96: Ground posture calculation unit (AHRS)

111: Absolute position calculation unit

112: Doppler speed calculation unit

113: Absolute posture calculation unit

130: Reverse shift processing unit

131: Cross-correlation calculation unit

132: Peak detection unit

201: Noise cancelling system

211: In-vehicle seat

212: Sound source

213-1 to 213-2: Reference sensor

214-1, 214-2: Speaker

215-1, 215-2: Electronic apparatus

251: Game system

261-1, 261-2: Sound output block

262: Display device

263: Electronic apparatus

301: Navigation system

331-1, 331-2: Sound output block

332: Electronic apparatus

351: Motion capture system

361-1 to 361-4: Sound output block

362: Electronic apparatus

411: Home audio system

430: Display device

431-1 to 431-4, 431'-1 to 431'-4: Sound output block

432': Electronic apparatus

441: Sound input block

451: Sound input unit

452: IMU

471: Spread code generation unit

472: Known musical composition sound source generation unit

473: Sound generation unit

474: Sound output unit

481: Spread unit

482: Frequency shift processing unit

483: Sound field control unit

484: Band compression unit

485, 485': Division-multiplexing unit

491: Reception unit

543: Transmission unit

591: Known musical composition sound source removal unit

592: Space transmission characteristic calculation unit

593: Transmission time calculation unit

594: Doppler frequency shift calculation unit

595: Position-posture calculation unit

596: Ground posture calculation unit (AHRS)

611: Absolute position calculation unit

612: Doppler speed calculation unit

613: Absolute posture calculation unit

**Claims**

1. An information processing device comprising:

    a sound reception unit that receives a sound signal output from each of multiple sound output blocks present at known positions, the sound signal including a spread code signal based on a spread code to which spread spectrum modulation has been applied;
    an IMU (Inertial Measurement Unit) that detects angular velocity and acceleration; and
    a position-posture calculation unit that calculates an own absolute position and an own absolute posture on a basis of the sound signal received by the sound reception unit, the angular velocity, and the acceleration.

2. The information processing device according to claim 1, further comprising:

    a ground posture detection unit that detects the own ground posture on a basis of the angular velocity and the acceleration, wherein
    the position-posture calculation unit includes a transmission time calculation unit that calculates a transmission time of the sound signal,
    the position-posture calculation unit calculates the own absolute position on a basis of the transmission time and a known position of each of the multiple sound output blocks,
    the position-posture calculation unit includes an absolute speed calculation unit that calculates the own absolute speed on the basis of the sound signal, and
    the position-posture calculation unit calculates the absolute posture on a basis of the own absolute speed and the ground posture.

3. The information processing device according to claim 2, wherein

    the transmission time calculation unit includes

    a cross-correlation calculation unit that calculates each cross-correlation between the spread code signal included in the sound signal received by the sound reception unit and the spread code signals of the sound signals output from the multiple sound output blocks, and
    a peak detection unit that detects a time corresponding to a peak in the cross-correlation as the transmission time, and

    the transmission time calculation unit calculates the own absolute position on the basis of the transmission time detected by the peak detection unit and the known position of each of the multiple sound output blocks.

4. The information processing device according to claim 3, wherein the transmission time calculation unit calculates the own absolute position by calculating simultaneous equations that are equations based on the transmission time detected by the peak detection unit and the known position of each of the multiple sound output blocks and that designate a coordinate of the own absolute position as an unknown.

5. The information processing device according to claim 4, wherein the transmission time calculation unit calculates the own absolute position by calculating simultaneous equations that are equations based on the transmission time detected by the peak detection unit and the known position of each of the multiple sound output blocks and that designate, in addition to the coordinate of the own absolute position, a distance offset corresponding to a system delay, as unknowns.

6. The information processing device according to claim 2, wherein the absolute speed calculation unit calculates the own absolute speed on a basis of a Doppler frequency shift amount of the sound signal received by the sound reception unit.

7. The information processing device according to claim 2, wherein the position-posture calculation unit calculates the absolute posture in such a manner that a posture change based on the absolute speed corresponds to a posture change based on the ground posture.

8. The information processing device according to claim 1, further comprising:

a ground posture detection unit that detects an own ground posture on a basis of the angular velocity and the acceleration; and

a cross-correlation calculation unit that calculates each cross-correlation between the spread code signal included in the sound signal received by the sound reception unit and the spread code signals of the sound signals output from the multiple sound output blocks, wherein

the position-posture calculation unit calculates the absolute posture on a basis of an absolute speed that is an own speed at a time of a maximum peak of the cross-correlation and the ground posture.

9. The information processing device according to claim 1, wherein the sound signal that is output from each of the multiple sound output blocks present at the known positions and includes the spread code signal based on the spread code to which spread spectrum modulation has been applied is processed so as to become a sound signal that is not easily perceivable for a human sense of hearing.

10. The information processing device according to claim 9, wherein

the sound signal that is output from each of the multiple sound output blocks present at the known positions and includes the spread code signal based on the spread code to which spread spectrum modulation has been applied is up-sampled, and processed so as to become a sound signal that is not easily perceivable for the human sense of hearing, by shift-processing for imposing limitation to a predetermined frequency band that is not easily perceivable for the human sense of hearing, and

the information processing device further includes a reverse shift processing unit that performs a reverse shift process of the shift process for the sound signal received by the sound reception unit and including the spread code signal.

11. The information processing device according to claim 9, wherein the sound signal that is output from each of the multiple sound output blocks present at the known positions and includes the spread code signal based on the spread code to which spread spectrum modulation has been applied is subjected to auditory compression so as to become a sound signal that is not easily perceivable for the human sense of hearing.

12. The information processing device according to claim 1, wherein

the sound signal that is output from each of the multiple sound output blocks present at the known positions and includes the spread code signal based on the spread code to which spread spectrum modulation has been applied is received together with sound including a known musical composition sound source,

the information processing device further includes a known musical composition sound source removal unit that removes the known musical composition sound source from the sound received by the sound reception unit, and

the position-posture calculation unit calculates the own absolute position and the own absolute posture on a basis of the sound signal from which the known musical composition sound source has been removed by the known musical composition sound source removal unit.

13. The information processing device according to claim 1, further comprising:
a control unit that controls an operation on a basis of the own absolute position and the own absolute posture calculated by the position-posture calculation unit.

14. The information processing device according to claim 13, wherein the control unit causes each of the multiple sound output blocks to output sound that forms a sound field corresponding to the own absolute position and the own absolute posture calculated by the position-posture calculation unit.

15. The information processing device according to claim 13, further comprising:

a display unit that constitutes an HMD (Head Mounted Display), wherein
the control unit controls display of the display unit to display an image corresponding to the own absolute position and the own absolute posture calculated by the position-posture calculation unit.

16. The information processing device according to claim 15, wherein the display unit is a see-through display unit.

17. The information processing device according to claim 1, wherein the sound signals that are output from the multiple sound output blocks present at the known positions and each include the spread code signal based on the spread code to which spread spectrum modulation has been applied are orthogonal to each other on a frequency axis.

18. The information processing device according to claim 17, wherein the sound signals that are output from the multiple sound output blocks present at the known positions and each include the spread code signal are signals in different frequency bands on the frequency axis.

19. The information processing device according to claim 18, wherein the sound signals that are output from the multiple sound output blocks present at the known positions and each include the spread code signal are signals each divided by a predetermined frequency bandwidth and arranged on the frequency axis in a predetermined order without overlap of the frequency bands.

20. The information processing device according to claim 19, wherein the sound signals that are output from the multiple sound output blocks present at the known positions and each include the spread code signal are signals whose each frequency bandwidth is compressed to a rate of a reciprocal of a number of the multiple sound output blocks, is each divided by the predetermined frequency bandwidth, and is arranged on the frequency axis in the predetermined order without overlap of the frequency bands.

21. The information processing device according to claim 19, wherein the predetermined frequency bandwidth is set according to an own speed.

22. The information processing device according to claim 21, wherein the predetermined frequency bandwidth is set to a longer bandwidth as the own speed increases.

23. The information processing device according to claim 21, further comprising:

an absolute speed calculation unit that calculates the own absolute speed on a basis of the sound signal;
a parameter determination unit that determines a parameter for setting the predetermined frequency bandwidth on a basis of the absolute speed; and
a transmission unit that transmits the parameter to each of the multiple sound output blocks, wherein
each of the multiple sound output blocks divides a frequency band of the sound signal including the spread code signal by the predetermined frequency bandwidth based on the parameter transmitted from the transmission unit, and arranges the sound signal so as to be orthogonal to the sound signal emitted from each of the other sound output blocks and including the spread code signal, on the frequency axis.

24. An information processing method comprising:

a step of receiving a sound signal output from each of multiple sound output blocks present at known positions, the sound signal including a spread code signal based on a spread code to which spread spectrum modulation has been applied;
a step of detecting angular velocity and acceleration; and
a step of calculating an own absolute position and an own absolute posture on a basis of the received sound signal, the angular velocity, and the acceleration.

25. A program that causes a computer to function as:

a sound reception unit that receives a sound signal output from each of multiple sound output blocks present at known positions, the sound signal including a spread code signal based on a spread code to which spread spectrum modulation has been applied;
an IMU (Inertial Measurement Unit) that detects angular velocity and acceleration; and
a position-posture calculation unit that calculates an own absolute position and an own absolute posture on a basis of the sound signal received by the sound reception unit, the angular velocity, and the acceleration.

# FIG.1

31-1

SOUND
OUTPUT BLOCK

30

31-2

SOUND
OUTPUT BLOCK

11

32

ELECTRONIC
APPARATUS

MOVE

31-3

SOUND
OUTPUT BLOCK

31-4

SOUND
OUTPUT BLOCK

32

ELECTRONIC APPARATUS

41

SOUND INPUT BLOCK

51

SOUND
INPUT UNIT

52

IMU

35

F I G . 2

SOUND OUTPUT BLOCK 31-1

31-2, 31-3, 31-4

ELECTRONIC APPARATUS

71 SPREAD CODE GENERATION UNIT

72 KNOWN MUSICAL COMPOSITION SOUND SOURCE GENERATION UNIT

73 SOUND GENERATION UNIT

81 SPREAD UNIT

82 FREQUENCY SHIFT PROCESSING UNIT

83 SOUND FIELD CONTROL UNIT

74 SOUND OUTPUT UNIT

36

F I G . 3

ELECTRONIC APPARATUS 32

41

SOUND INPUT BLOCK

CONTROL UNIT 42

OUTPUT UNIT 43

ABSOLUTE POSITION
ABSOLUTE POSTURE

POSITION-POSTURE CALCULATION UNIT 95

TRANSMISSION TIME CALCULATION UNIT 93

DOPPLER FREQUENCY SHIFT CALCULATION UNIT 94

GROUND POSITION CALCULATION UNIT (AHRS) 96

KNOWN MUSICAL COMPOSITION SOUND SOURCE REMOVAL UNIT 91

SPACE TRANSMISSION CHARACTERISTIC CALCULATION UNIT 92

SOUND INPUT UNIT 51

IMU 52

# F I G . 4

POSITION-POSTURE CALCULATION UNIT  95

TRANSMISSION TIME → ABSOLUTE POSITION CALCULATION UNIT  111 → ABSOLUTE POSITION X, Y, Z

DOPPLER FREQUENCY SHIFT AMOUNT → DOPPLER SPEED CALCULATION UNIT  112 → ABSOLUTE SPEED VX, VY, VZ → ABSOLUTE POSTURE CALCULATION UNIT  113 → ABSOLUTE POSTURE Roll, Pitch, Yaw

GROUND POSTURE Roll/Pitch/(Yaw: INDEFINITE)

EAST
NORTH — SOUTH
WEST

Yaw  z
Roll  Pitch
x  y  GROUND SURFACE

EP 4 287 647 A1

# FIG.5

EP 4 287 647 A1

# F I G . 6

EP 4 287 647 A1

# FIG.8

73

SOUND GENERATION UNIT

81

SPREAD UNIT

82

FREQUENCY SHIFT PROCESSING UNIT

74

51

91

KNOWN MUSICAL COMPOSITION SOUND SOURCE REMOVAL UNIT

CROSS-CORRELATION CALCULATION UNIT (DESPREAD)

REVERSE SHIFT PROCESSING UNIT

131

130

PEAK DETECTION UNIT

132

TRANSMISSION TIME CALCULATION UNIT

93

TRANSMISSION TIME

# FIG.9

# FIG.10

FIG.11

EP 4 287 647 A1

# FIG.12

SOUND PRESSURE LEVEL [dBSPL]

$Z_2$

0dB

$Z_1$

$Z_1$

+20dB

SPREAD CODE SIGNAL — $Z_3'$

-50dB

3kHz   16kHz   24kHz   REPRODUCTION FREQUENCY [kHz]

L   $Z_{11}$

# FIG.13

(X1,Y1,Z1)

(X2,Y2,Z2)

31-2

31-1

(x1,y1,z1)
41-1
51-1

(x2,y2,z2)
51-2
41-2

31-3

31-4

(X3,Y3,Z3)

(X4,Y4,Z4)

# FIG.14

```
        ┌─────────────────────┐
        │    START SOUND      │
        │  EMISSION PROCESS   │
        └─────────────────────┘
                   │
                   ▼          S11
        ┌─────────────────────┐
        │ GENERATE SPREAD CODE │
        └─────────────────────┘
                   │
                   ▼          S12
        ┌─────────────────────┐
        │ GENERATE KNOWN MUSICAL│
        │COMPOSITION SOUND SOURCE│
        └─────────────────────┘
                   │
                   ▼          S13
        ┌─────────────────────┐
        │ ACHIEVE SPREAD SPECTRUM│
        │    BY SPREAD CODE    │
        └─────────────────────┘
                   │
                   ▼          S14
        ┌─────────────────────┐
        │  PERFORM FREQUENCY  │
        │    SHIFT PROCESS    │
        └─────────────────────┘
                   │
                   ▼          S15
        ┌─────────────────────┐
        │EMIT KNOWN MUSICAL COMPOSITION SOUND│
        │SOURCE AND SOUND OF SPREAD CODE SIGNAL│
        └─────────────────────┘
                   │
                   ▼
        ┌─────────────────────┐
        │        END          │
        └─────────────────────┘
```

# FIG.15

```
        START SOUND
     COLLECTION PROCESS

              │ S31
   ┌──────────────────────┐
   │     COLLECT SOUND     │
   └──────────────────────┘
              │ S32
   ┌──────────────────────┐
   │ CALCULATE SPACE TRANSMISSION │
   │     CHARACTERISTIC    │
   └──────────────────────┘
              │ S33
   ┌──────────────────────────────────────┐
   │ GENERATE ANTIPHASE SIGNAL OF MUSICAL COMPOSITION │
   │ AND REMOVE KNOWN MUSICAL COMPOSITION SOUND SOURCE │
   └──────────────────────────────────────┘
              │ S34
   ┌──────────────────────┐
   │   TRANSMISSION TIME    │
   │  CALCULATION PROCESS   │
   └──────────────────────┘
              │ S35
   ┌──────────────────────┐
   │   CALCULATE DOPPLER    │
   │ FREQUENCY SHIFT AMOUNT │
   └──────────────────────┘
              │ S36
   ┌──────────────────────┐
   │ DETECT ANGULAR VELOCITY │
   │   AND ACCELERATION     │
   └──────────────────────┘
              │ S37
   ┌──────────────────────┐
   │   CALCULATE GROUND     │
   │       POSTURE          │
   └──────────────────────┘
              │ S38
   ┌──────────────────────┐
   │   POSITION-POSTURE     │
   │  CALCULATION PROCESS   │
   └──────────────────────┘
              │ S39
   ┌──────────────────────────────────────┐
   │ PERFORM PROCESS BASED ON CALCULATED   │
   │ ABSOLUTE POSITION AND ABSOLUTE POSTURE │
   └──────────────────────────────────────┘
              │
            END
```

# FIG.16

```
      ┌─────────────────────────┐
      │ START TRANSMISSION TIME │
      │   CALCULATION PROCESS   │
      └─────────────────────────┘
                   │
                   ▼          S51
      ┌─────────────────────────┐
      │ REVERSELY SHIFT FREQUENCY │
      └─────────────────────────┘
                   │
                   ▼          S52
      ┌─────────────────────────┐
      │ CALCULATE CROSS-CORRELATION │
      └─────────────────────────┘
                   │
                   ▼          S53
      ┌─────────────────────────┐
      │   DETECT PEAK POSITION   │
      └─────────────────────────┘
                   │
                   ▼          S54
      ┌─────────────────────────┐
      │ CALCULATE TRANSMISSION TIME │
      └─────────────────────────┘
                   │
                   ▼
            ┌──────────────┐
            │    RETURN    │
            └──────────────┘
```

# FIG.17

```
      ┌─────────────────────────┐
      │ START POSITION-POSTURE  │
      │   CALCULATION PROCESS   │
      └─────────────────────────┘
                  │
                  ▼           S71
      ┌─────────────────────────┐
      │ CALCULATE DISTANCE FROM │
      │   SOUND OUTPUT BLOCK    │
      └─────────────────────────┘
                  │
                  ▼           S72
      ┌─────────────────────────┐
      │ CALCULATE ABSOLUTE      │
      │        POSITION         │
      └─────────────────────────┘
                  │
                  ▼           S73
      ┌─────────────────────────┐
      │ CALCULATE DOPPLER SPEED │
      └─────────────────────────┘
                  │
                  ▼           S74
      ┌─────────────────────────┐
      │ CALCULATE ABSOLUTE      │
      │        POSTURE          │
      └─────────────────────────┘
                  │
                  ▼
      ┌─────────────────────────┐
      │         RETURN          │
      └─────────────────────────┘
```

# F I G . 1 8

........................ : FIRST TRANSMISSION
CHARACTERISTIC

— · — · — · — : SECOND TRANSMISSION
CHARACTERISTIC

212

213-1  213-2

214-1

215-1

214-2

215-2

211

H

201

# FIG.19

261-1

SOUND
OUTPUT BLOCK

262

TV

261-2

SOUND
OUTPUT BLOCK

251

MOVE

ELECTRONIC
APPARATUS

263

263

ELECTRONIC APPARATUS

271-1

SOUND
INPUT BLOCK

271-2

SOUND
OUTPUT BLOCK

FIG.20

# FIG.21

EP 4 287 647 A1

FIG.22

401-1

De1

402

De2

401-2

# FIG.23

EP 4 287 647 A1

# FIG.24

EP 4 287 647 A1

# FIG.25

FIG.26

# FIG.27

# FIG.28

401-1

De11

401-2

De12

402′

RECEPTION SIGNAL ~ De11′
RECEPTION SIGNAL ~ De12′

$\otimes$

SPREAD CODE

Ex1

SPREAD CODE ~ Ex2

CORRELATION POWER

DELAY AMOUNT

RP11

FP12

CORRELATION POWER

DELAY AMOUNT

RP12

FP11

EP 4 287 647 A1

# FIG.29

F I G . 3 0

# FIG.31

431-1

SOUND
OUTPUT BLOCK

430

431-2

SOUND
OUTPUT BLOCK

411

432

ELECTRONIC
APPARATUS

MOVE

431-3

SOUND
OUTPUT BLOCK

431-4

SOUND
OUTPUT BLOCK

432

ELECTRONIC APPARATUS

441

SOUND INPUT BLOCK

451

SOUND
INPUT UNIT

452

IMU

# FIG.32

EP 4 287 647 A1

# F I G . 3 3

# F I G . 3 4

START SOUND
EMISSION PROCESS

S101
GENERATE SPREAD CODE

S102
GENERATE KNOWN MUSICAL
COMPOSITION SOUND SOURCE

S103
ACHIEVE SPREAD SPECTRUM
BY SPREAD CODE

S104
COMPRESS BANDWIDTH ON
FREQUENCY AXIS

S105
DIVIDE INTO PREDETERMINED BANDWIDTH
AND ARRANGE IN n-TH SEQUENCE

S106
PERFORM FREQUENCY
SHIFT PROCESS

S107
EMIT KNOWN MUSICAL COMPOSITION SOUND
SOURCE AND SOUND OF SPREAD CODE SIGNAL

END

F I G . 3 5

SIGNAL POWER

FIRST SEQUENCE

SECOND SEQUENCE

THIRD SEQUENCE

FOURTH SEQUENCE

h0    h5    h10    h15    h20

# FIG.36

SIGNAL POWER

BH1

FREQUENCY

SIGNAL POWER

BH2

FREQUENCY

# FIG.37

SIGNAL POWER

FREQUENCY

SIGNAL POWER

FREQUENCY

EP 4 287 647 A1

FIG.38

# FIG.39

431'-1 430 431'-2

SOUND OUTPUT BLOCK    SOUND OUTPUT BLOCK

411'

MOVE

432 ELECTRONIC APPARATUS

431'-3 431'-4

SOUND OUTPUT BLOCK    SOUND OUTPUT BLOCK

432

ELECTRONIC APPARATUS

441'

SOUND INPUT BLOCK

451

SOUND INPUT UNIT

452

IMU

453

PARAMETER DETERMINATION UNIT

# FIG.40

EP 4 287 647 A1

# FIG.41

EP 4 287 647 A1

# FIG.42

POSITION-POSTURE CALCULATION UNIT  595

611  ABSOLUTE POSITION CALCULATION UNIT

TRANSMISSION TIME → ABSOLUTE POSITION CALCULATION UNIT → ABSOLUTE POSITION X, Y, Z

453  PARAMETER DETERMINATION UNIT

612  DOPPLER SPEED CALCULATION UNIT

DOPPLER FREQUENCY SHIFT AMOUNT → DOPPLER SPEED CALCULATION UNIT → ABSOLUTE SPEED VX, VY, VZ

613  ABSOLUTE POSTURE CALCULATION UNIT → ABSOLUTE POSTURE Roll, Pitch, Yaw

GROUND POSTURE Roll/Pitch/(Yaw: INDEFINITE)

EAST
NORTH — SOUTH
WEST

z
Yaw
Pitch
Roll  y
x  GROUND SURFACE

EP 4 287 647 A1

# FIG.43

```
        ( START SOUND
          COLLECTION PROCESS )
                   │
                   ▼        S131
        ┌──────────────────────────┐
        │      COLLECT SOUND        │
        └──────────────────────────┘
                   │
                   ▼        S132
        ┌──────────────────────────────────────┐
        │ CALCULATE SPACE TRANSMISSION CHARACTERISTIC │
        └──────────────────────────────────────┘
                   │
                   ▼        S133
        ┌──────────────────────────────────────┐
        │ GENERATE ANTIPHASE SIGNAL OF MUSICAL COMPOSITION │
        │ AND REMOVE KNOWN MUSICAL COMPOSITION SOUND SOURCE │
        └──────────────────────────────────────┘
                   │
                   ▼        S134
        ┌──────────────────────────────────────┐
        │ │ TRANSMISSION TIME CALCULATION PROCESS │ │
        └──────────────────────────────────────┘
                   │
                   ▼        S135
        ┌──────────────────────────────────────┐
        │ CALCULATE DOPPLER FREQUENCY SHIFT AMOUNT │
        └──────────────────────────────────────┘
                   │
                   ▼        S136
        ┌──────────────────────────────────────┐
        │ DETECT ANGULAR VELOCITY AND ACCELERATION │
        └──────────────────────────────────────┘
                   │
                   ▼        S137
        ┌──────────────────────────┐
        │ CALCULATE GROUND POSTURE  │
        └──────────────────────────┘
                   │
                   ▼        S138
        ┌──────────────────────────────────────┐
        │ │ POSITION-POSTURE CALCULATION PROCESS │ │
        └──────────────────────────────────────┘
                   │
                   ▼        S139                          S140
        ╱───────────────────────╲  Yes  ┌──────────────────────────────┐
       ╱    SUBSTANTIALLY        ╲─────▶│ DESIGNATE PARAMETER CORRESPONDING │
       ╲    STATIONARY?          ╱      │     TO BANDWIDTH BH11         │
        ╲───────────────────────╱      └──────────────────────────────┘
                   │ No                              │
                   ▼        S141                      S142
        ╱───────────────────────╲  Yes  ┌──────────────────────────────┐
       ╱      WALKING?           ╲─────▶│ DESIGNATE PARAMETER CORRESPONDING │
       ╲                         ╱      │  TO BANDWIDTH BH12 (> BH11)  │
        ╲───────────────────────╱      └──────────────────────────────┘
                   │ No                              │
                   ▼        S143                      │
        ┌──────────────────────────────┐            │
        │ DESIGNATE PARAMETER CORRESPONDING │        │
        │  TO BANDWIDTH BH13 (> BH12)  │            │
        └──────────────────────────────┘            │
                   │◀───────────────────────────────┘
                   ▼        S144
        ┌──────────────────────────┐
        │    TRANSMIT PARAMETER     │
        └──────────────────────────┘
                   │
                   ▼        S145
        ┌──────────────────────────────────────┐
        │ PERFORM PROCESS BASED ON CALCULATED   │
        │ ABSOLUTE POSITION AND ABSOLUTE POSTURE │
        └──────────────────────────────────────┘
                   │
                   ▼
               (    END    )
```

# FIG.44

```
        ┌─────────────────────┐
        │    START SOUND      │
        │  EMISSION PROCESS   │
        └─────────────────────┘
                   │
                   ▼           S151
        ┌─────────────────────┐
        │ GENERATE SPREAD CODE│
        └─────────────────────┘
                   │
                   ▼           S152
        ┌─────────────────────┐
        │ GENERATE KNOWN MUSICAL│
        │COMPOSITION SOUND SOURCE│
        └─────────────────────┘
                   │
                   ▼           S153
        ┌─────────────────────┐
        │ ACHIEVE SPREAD SPECTRUM│
        │    BY SPREAD CODE   │
        └─────────────────────┘
                   │
                   ▼           S154
        ┌─────────────────────┐
        │ COMPRESS BANDWIDTH ON│
        │    FREQUENCY AXIS   │
        └─────────────────────┘
                   │
                   ▼           S155
        ┌─────────────────────┐
        │  RECEIVE PARAMETER  │
        └─────────────────────┘
                   │
                   ▼           S156
        ┌──────────────────────────────┐
        │DIVIDE INTO BANDWIDTH CORRESPONDING TO│
        │PARAMETER AND ARRANGE IN n-TH SEQUENCE│
        └──────────────────────────────┘
                   │
                   ▼           S157
        ┌─────────────────────┐
        │  PERFORM FREQUENCY  │
        │    SHIFT PROCESS    │
        └─────────────────────┘
                   │
                   ▼           S158
        ┌──────────────────────────────┐
        │EMIT KNOWN MUSICAL COMPOSITION SOUND│
        │SOURCE AND SOUND OF SPREAD CODE SIGNAL│
        └──────────────────────────────┘
                   │
                   ▼
        ┌─────────────────────┐
        │        END          │
        └─────────────────────┘
```

# FIG.45

## INTERNATIONAL SEARCH REPORT

International application No.

**PCT/JP2022/003256**

**A.** **CLASSIFICATION OF SUBJECT MATTER**

*H04R 3/00*(2006.01)i; *A63F 13/215*(2014.01)i; *A63F 13/216*(2014.01)i; *H04B 1/707*(2011.01)i; *G01S 5/30*(2006.01)i; *G06F 3/01*(2006.01)i; *G06F 3/0346*(2013.01)i
FI:    G06F3/01 510; H04B1/707; H04R3/00 310; H04R3/00 320; G06F3/01 570; A63F13/215; A63F13/216; G01S5/30; G06F3/0346 424

According to International Patent Classification (IPC) or to both national classification and IPC

**B.** **FIELDS SEARCHED**

Minimum documentation searched (classification system followed by classification symbols)
   H04R3/00; A63F13/215; A63F13/216; H04B1/707; G01S5/30; G06F3/01; G06F3/0346

Documentation searched other than minimum documentation to the extent that such documents are included in the fields searched

   Published examined utility model applications of Japan 1922-1996
   Published unexamined utility model applications of Japan 1971-2022
   Registered utility model specifications of Japan 1996-2022
   Published registered utility model applications of Japan 1994-2022

Electronic data base consulted during the international search (name of data base and, where practicable, search terms used)

**C.** **DOCUMENTS CONSIDERED TO BE RELEVANT**

| Category* | Citation of document, with indication, where appropriate, of the relevant passages | Relevant to claim No. |
|---|---|---|
| A | JP 2013-250838 A (NINTENDO CO LTD) 12 December 2013 (2013-12-12)<br>   entire text, all drawings | 1-25 |
| A | JP 2014-116722 A (SONY CORP) 26 June 2014 (2014-06-26)<br>   entire text, all drawings | 1-25 |
| A | JP 2009-115735 A (NIPPON TELEGR & TELEPH CORP <NTT>) 28 May 2009 (2009-05-28)<br>   entire text, all drawings | 1-25 |
| A | JP 2014-220741 A (YAMAHA CORP) 20 November 2014 (2014-11-20)<br>   entire text, all drawings | 1-25 |

☐ Further documents are listed in the continuation of Box C.   ☑ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
|---|---|
| **04 April 2022** | **19 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/003256**

| Patent document cited in search report | | | Publication date (day/month/year) | Patent family member(s) | | | Publication date (day/month/year) |
|---|---|---|---|---|---|---|---|
| JP | 2013-250838 | A | 12 December 2013 | US 2013/0321568 A1 entire text, all drawings | | | |
| JP | 2014-116722 | A | 26 June 2014 | US 2015/0304790 A1 entire text, all drawings WO 2014/087558 A1 CN 103869968 A | | | |
| JP | 2009-115735 | A | 28 May 2009 | (Family: none) | | | |
| JP | 2014-220741 | A | 20 November 2014 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014220741 A